# EUROPEAN PATENT APPLICATION

(11) **EP 4 579 928 A1**
(43) Date of publication of application: **02.07.2025**
(21) Application number: 22960006.9
(22) Date of filing: 29.09.2022
(51) Int. Cl.: H01M 50/531, H01M 50/536, H01M 50/538, H01M 10/0587, G06F 15/16

(54) **ELECTROCHEMICAL APPARATUS AND ELECTRIC DEVICE**

(71) Applicant: Ningde Amperex Technology Limited, Ningde, Fujian 352100 (CN)
(72) Inventor: LI, Fangfang, Ningde, Fujian 352100 (CN); DAI, Zhifang, Ningde, Fujian 352100 (CN); HU, Xiaoming, Ningde, Fujian 352100 (CN)
(74) Representative: Icosa
(86) International application number: PCT/CN2022/122468
(87) International publication number: WO 2024/065365

(57) **Abstract**

This application discloses an electrochemical apparatus and an electric device. The electrochemical apparatus includes an electrode plate. The electrode plate includes a current collector, an active material layer arranged on a surface of the current collector, and a plurality of electrode tab connection portions, where each electrode tab connection portion includes a first part and a second part, and in an unfolded state of the electrode plate, the first parts of the plurality of electrode tab connection portions extend from an edge of the current collector along a width direction of the electrode plate and are spaced apart from each other, and the second parts are arranged on surfaces of the first parts and are electrically connected to the first parts.

## Description

### TECHNICAL FIELD

This application relates to the field of electrochemical technologies, and in particular, to an electrochemical apparatus and an electric device.

### BACKGROUND

With the continuous development of science and technology, electrochemical apparatuses (including but not limited to lithium-ion batteries and sodium-ion batteries) have been widely used, providing convenience for people to use tablet computers, mobile phones, electric vehicles, energy storage devices, and other equipment.

In a class of electrochemical devices in the related art, the electrochemical apparatus includes a cathode electrode plate, an anode electrode plate, and a separator arranged therebetween. In the preparation process thereof, a plurality of structures for leading out electrode tabs need to be die-cut out on edge blank regions of current collectors on the cathode electrode plate and the anode electrode plate, and the electrode tabs are electrically connected to the structures.

For this class of electrochemical apparatuses, in order to prevent short circuits between the cathode electrode plate and the anode electrode plate, an insulating layer is generally provided between the active material layer on the current collector of the cathode electrode plate and the edge blank region of the current collector. During preparation of the cathode electrode plate thereof, one method is to first cold-press the cathode electrode plate provided with the active material layer and the insulating layer before die-cutting. Due to different thicknesses of the insulating layer and the edge blank region of the current collector, the edge blank region of the current collector is easily wrinkled during the cold-pressing process. Therefore, before cold-pressing, the edge blank region of the current collector of the cathode electrode plate is generally stretched first, so that deformation degrees of the edge blank region of the current collector and the insulating layer tend to be consistent, thereby preventing the cathode electrode plate from being wrinkled when the cathode electrode plate is cold-pressed later. However, although this structure can alleviate the problem of the wrinkling of the cathode electrode plate during cold pressing, it increases the cold pressing tensile strength of the cathode electrode plate, causing the cathode electrode plate to easily fracture during the cold pressing process, greatly reducing the preparation efficiency of the electrochemical apparatuses.

### SUMMARY

In view of this, some embodiments of this application provide an electrochemical apparatus and an electric device to at least partially alleviate the preceding problems.

According to a first aspect of some embodiments of this application, an electrochemical apparatus is provided and includes an electrode plate. The electrode plate includes a current collector, an active material layer arranged on a surface of the current collector, and a plurality of electrode tab connection portions, where each electrode tab connection portion includes a first part and a second part, and in an unfolded state of the electrode plate, the first parts of the plurality of electrode tab connection portions extend from an edge of the current collector along a width direction of the electrode plate and are spaced apart from each other, and the second parts are arranged on surfaces of the first parts and are electrically connected to the first parts.

The electrochemical apparatus provided in some embodiments of this application, as the electrode plate of the electrochemical apparatus includes a plurality of electrode tab connection portions. Each electrode tab connection portion includes a first part (that is, a blank region extending from an edge of the current collector) and a second part, where the first part is electrically connected to the second part, the electrode tab is no longer directly electrically connected to the first part, but the second part is arranged on a surface of the first part to form the electrode tab connection portion, and then the electrode tab is welded to the first part through the electrode tab connection portion. In this way, during preparation of the electrode plate of the electrochemical apparatus, the electrode tab connection portion does not need to be directly formed on the first part, which can reduce a width of the first part, thereby alleviating the problem of wrinkling during cold pressing. In addition, as it is not necessary to stretch the first part (that is, the blank region extending from the edge of the current collector) before cold pressing the electrode plate, the problem of wrinkling of the cathode electrode plate during subsequent cold pressing of the cathode electrode plate can also be alleviated. Moreover, it is not necessary to stretch the first part of the electrode plate (that is, the blank region extending from the edge of the current collector), so the cold pressing tensile strength of the electrode plate is also reduced, thereby alleviating the problem of easy fracture of the electrode plate during the cold pressing process, and thus the preparation yield of the electrochemical apparatus can be increased.

In some optional embodiments, along the width direction of the electrode plate, a width W1 of the second part meets 3 mm≤W1≤35 mm.

When the width of the second part is too small, it is difficult to weld the second part to the first part during preparation of the electrochemical apparatus; and when the width of the second part is too large, during preparation of the electrode plate (for example, a cathode electrode plate), an edge of the second part is prone to collapse during die cutting, thereby affecting the die cutting accuracy. In particular, when the die cutting operation is performed by laser cutting, the laser focus is seriously away from the cutting surface, which is also prone to continuous cutting and accidental breakage of the second part. In these embodiments, with the width of the second part meeting the foregoing value range (that is, 3 mm≤W1≤35 mm), it not only can better avoid the drawback of the width of the second part being too small, but also can avoid the drawback of the width of the second part being too large, thereby meeting the usage requirements of the electrochemical apparatus and increasing the preparation yield of the electrochemical apparatus.

In some optional embodiments, along the width direction of the electrode plate, the width W1 of the second part meets 5 mm≤W1≤25 mm. In this application, with the width of the second part falling within such value range, it can more effectively avoid the drawback of too small width of the second part, but also better avoid the drawback of too large width of the second part, thereby meeting the usage requirements of the electrochemical apparatus and further increasing the preparation yield of the electrochemical apparatus.

In some optional embodiments, along the width direction of the electrode plate, a width W2 of the first part meets 0.5 mm≤W2≤20 mm.

When the width of the first part is too small, it is difficult to ensure the welding width during the preparation of the electrochemical apparatus, making it more difficult to weld the second part to the first part. When the width of the first part is too large, the first part is more prone to wrinkling after cold pressing during the preparation of the electrode plate (for example, the cathode electrode plate), affecting the gathering of the second part welded on the first part after die-cutting, which will increase energy density loss and cause an increase in cost. In these embodiments, with the width of the first part meeting the foregoing value range (that is, 0.5 mm≤W2≤20 mm), it not only can better avoid the drawback of the width of the first part being too small, but also can better avoid the drawback of the width of the first part 131 being too large, thereby meeting the usage requirements of the electrochemical apparatus and increasing the preparation yield of the electrochemical apparatus.

In some optional embodiments, along the width direction of the electrode plate, the width W2 of the first part meets 1 mm≤W2≤10 mm. In this application, with the width of the first part falling within such value range, it can better avoid the drawback of too small width of the first part, but also better avoid the drawback of too large width of the first part, thereby meeting the usage requirements of the electrochemical apparatus and further increasing the preparation yield of the electrochemical apparatus.

In some optional embodiments, the electrode plate includes a cathode electrode plate, an insulating layer is further provided on a surface of the current collector, and the active material layer and the insulating layer are arranged along the width direction of the electrode plate. Based on this, when the electrode plate is a cathode electrode plate, in this application, an insulating layer is configured to insulate and isolate the current collector of the cathode electrode plate from an anode electrode plate, which can effectively prevent short circuits between the cathode electrode plate and the anode electrode plate.

In some optional embodiments, along the width direction of the electrode plate, a width W3 of the insulating layer meets 0.5 mm≤W3≤5 mm. In these embodiments, with the insulating layer falling within this width range, it can effectively insulate and isolate the current collector of the cathode electrode plate from the anode electrode plate, preventing short circuits therebetween, and meeting the usage requirements of the electrochemical apparatus without incurring additional costs.

In some optional embodiments, the insulating layer is made of at least one of aluminum oxide or silicon oxide. In this application, with the insulating layer made of such materials to insulate and isolate the current collector of the cathode electrode plate from the anode electrode plate, it can effectively prevent short circuits between the cathode electrode plate and the anode electrode plate.

In some optional embodiments, along the width direction of the electrode plate, the insulating layer includes a first side close to the active material layer and a second side far away from the active material layer, where a first side of the second part is located on the insulating layer, and a spacing W4 between the first side of the second part and the second side of the insulating layer meets 0 mm≤W4≤8 mm; or a first side of the second part is located on a surface of the first part, and a spacing W4 between the first side of the first part and the second side of the insulating layer meets 0 mm≤W4≤10 mm.

When the electrode plate is a cathode electrode plate and the first side of the second part is located on the insulating layer, it is equivalent that a first end of the second part exceeds a first side of the first part along the opposite direction of the width direction of the electrode plate after the second part is welded to the first part. When the excess is too large, it is easy to cause a thickness of the electrochemical apparatus to be too large. When the electrode plate is a cathode electrode plate, the first side of the second part is located on the surface of the first part, and the spacing between the first side of the second part and the second side of the insulating layer is too large, the problem of folding after the first part and the second part are welded together cannot be effectively solved. In this application, with W4 meeting the foregoing value range, it not only can avoid the drawback when the first end of the second part exceeds the first side of the first part too large along the opposite direction of the width direction of the electrode plate, but also can avoid the drawback when the first side of the second part is located on the first part and the spacing between the first side of the second part and the second side of the insulating layer is too large, thereby meeting the usage requirements of the electrochemical apparatus and increasing the preparation yield of the electrochemical apparatus.

In some optional embodiments, the first side of the second part is located on the surface of the first part, and the spacing W4 between the first side of the second part and the second side of the insulating layer meets 0 mm≤W4≤5 mm. In this application, with W4 meeting this value range, it can better avoid the drawback when the first side of the second part is located on the first part and the spacing between the first side of the second part and the second side of the insulating layer is too large, thereby meeting the usage requirements of the electrochemical apparatus and further increasing the preparation yield of the electrochemical apparatus.

In some optional embodiments, the electrode plate includes an anode electrode plate. The anode electrode plate adopts the structure of the electrode plate in this application, which can effectively alleviate the problem of the anode electrode plate being prone to fracture during the cold pressing process, thereby increasing the preparation yield of the electrochemical apparatus.

In some optional embodiments, the first part and the second part are electrically connected through welding, and a first weld mark is formed when the first part and the second part are welded together; and along the width direction of the electrode plate, the first weld mark includes a first side close to the active material layer and a second side far away from the active material layer, where the second side of the first weld mark is located on the second part, and the first side of the first weld mark is apart from the active material layer. Based on this, the first part and the second part in this application are electrically connected through welding, which can ensure the stability of the electrical connection between the second part and the first part. The second side of the first weld mark is located on the second part, ensuring that the second part can form a stable welding connection with the first part.

In some optional embodiments, along the width direction of the electrode plate, the width W5 of the first weld mark meets 0.1 mm≤W5≤10 mm.

When the width of the first weld mark is too small, it is difficult to ensure that the welding tensile strength between the first part and the second part meets the requirements, resulting in the drawback of the welding tensile strength being too small. In addition, when the width of the first weld mark is too large, it is difficult to gather the die-cut second part after the die-cutting of the first part (that is, a blank region extending from an edge of the current collector) and the second part of the electrode plate (for example, the cathode electrode plate), which additionally increases the cost. In this application, with the width of the first weld mark meeting the foregoing value range (0.1 mm≤W5≤10 mm), it can avoid the drawback of the width of the first weld mark being too small, and can also avoid the drawback of the width of the first weld mark being too large, thereby meeting the usage requirements of the electrochemical apparatus and increasing the preparation yield of the electrochemical apparatus.

In some optional embodiments, the first side of the first weld mark is located on the first part, and a spacing W6 between the first side of the first weld mark and the first side of the second part meets 0 mm≤W6≤5 mm; or the first side of the first weld mark is located on a surface of the second part, and a spacing W6 between the first side of the first weld mark and the first side of the second part meets 0 mm≤W6≤30 mm.

When the first side of the first weld mark exceeds the first side of the second part too large along the opposite direction of the width direction of the electrode plate, there will be a large proportion of parts without active material (for example, cathode electrode active material). Therefore, the proportion of space that cannot provide energy is also large, causing significant energy density loss, affecting the subsequent electrical connection of the electrode tab (for example, a cathode electrode tab) to the second part (for example, the electrode tab (for example, the cathode electrode tab) and the second part are electrically connected through welding), and affecting the gathering of the die-cut second part. In this process, the second part is also easily damaged, which ultimately affects the electrical performance of the manufactured electrochemical apparatus. When the first side of the first weld mark exceeds the first side of the second part too large along the width direction of the electrode plate, the second part in an unconstrained state is too wide, which affects die cutting during the preparation the electrode plate (for example, the cathode electrode plate), increases the difficulty of the process, and affects the preparation rate of the electrochemical apparatus. In this application, with W6 falling within such value range, it not only can avoid the drawback when the first side of the first weld mark exceeds the first side of the second part too large along the opposite direction of the width direction of the electrode plate, but also avoid the drawback when the first side of the first weld mark exceeds the first side of the second part too large along the width direction of the electrode plate, thereby meeting the usage requirements of the electrochemical apparatus and increasing the preparation yield of the electrochemical apparatus.

In some optional embodiments, the first side of the first weld mark is located on the first part, and the spacing W6 between the first side of the first weld mark and the first side of the second part meets 0 mm≤W6≤3 mm; or the first side of the first weld mark is located on the surface of the second part, and the spacing W6 between the first side of the first weld mark and the first side of the second part meets 0 mm≤W6≤10 mm. In this application, with W6 falling within such value range, it can better avoid the drawback when the first side of the first weld mark exceeds the first side of the second part too large along the opposite direction of the width direction of the electrode plate, and can also avoid the drawback when the first side of the first weld mark exceeds the first side of the second part too large in the width direction of the electrode plate, thereby meeting the usage requirements of the electrochemical apparatus and increasing the preparation yield of the electrochemical apparatus.

In some optional embodiments, a first projection of the second side of the first weld mark on the second part overlaps with a second projection of the first part on the second part, and a spacing W7 between the second side of the first weld mark and the second side of the first part meets 0 mm≤W7≤15 mm; or a first projection of the second side of the first weld mark on the second part does not overlap with a second projection of the first part on the second part, and a spacing W7 between the second side of the first weld mark and the second side of the first part meets 0 mm≤W7≤7 mm.

When the first projection overlaps with the second projection, and the spacing W7 between the second side of the first weld mark and the second side of the first part is too large, to be specific, when the second side of the first part exceeds the second side of the first weld mark too large along the width direction of the electrode plate, the first part in the unconstrained state is too wide, which affects die cutting during the preparation of the electrode plate (for example, the cathode electrode plate), increases the difficulty of the process, and affects the preparation yield of the electrochemical apparatus. When the first projection does not overlap with the second projection, and the spacing W7 between the second side of the first weld mark and the second side of the first part is too large, to be specific, when the second side of the first weld mark exceeds the second side of the first part too large along the width direction of the electrode plate, it causes significant energy density loss, affects the subsequent electrical connection of the electrode tab (for example, a cathode electrode tab) to the second part (for example, the electrode tab (for example, the cathode electrode tab) and the second part are electrically connected through welding), and affects the gathering of the die-cut second part. In this process, the second part is also easily damaged, which ultimately affects the electrical performance of the manufactured electrochemical apparatus. In this application, with W7 falling within such value range, it not only can avoid the drawback when the second side of the first part exceeds the second side of the first weld mark too large along the width direction of the electrode plate, but also can avoid the drawback when the second side of the first weld mark exceeds the second side of the first part too large along the width direction of the electrode plate, thereby meeting the usage requirements of the electrochemical apparatus and increasing the preparation yield of the electrochemical apparatus.

In some optional embodiments, the first projection of the second side of the first weld mark on the second part overlaps with the second projection of the first part on the second part, and the spacing W7 between the second side of the first weld mark and the second side of the first part meets 0 mm≤W7≤10 mm; or the first projection of the second side of the first weld mark on the second part does not overlap with the second projection of the first part on the second part, and the spacing W7 between the second side of the first weld mark and the second side of the first part meets 0 mm≤W7≤3 mm. In this application, with W7 falling within such value range, it can better avoid the drawback when the second side of the first part exceeds the second side of the first weld mark too large along the width direction of the electrode plate, and can also avoid the drawback when the second side of the first weld mark exceeds the second side of the first part too large along the width direction of the electrode plate, thereby meeting the usage requirements of the electrochemical apparatus and increasing the preparation yield of the electrochemical apparatus.

In some optional embodiments, the electrochemical apparatus further includes a housing and an electrode tab extending out of the housing, where the electrode tab is electrically connected to the second part through welding, and a second weld mark is formed on the second part; and along the width direction of the electrode plate, the second weld mark includes a first side close to the first part and a second side far away from the first part; where a spacing W8 between the second side of the first weld mark and the first side of the second weld mark meets 0 mm<W8≤10 mm.

When the electrode tab (for example, a cathode electrode tab) is electrically connected to the second part through welding, the second weld mark formed on the second part and the first weld mark cannot overlap. If they overlap, it will affect the welding effect between the electrode tab (for example, the cathode electrode tab) and the second part, and reduce the welding tensile strength therebetween. In addition, if the spacing W8 between the second side of the first weld mark and the first side of the second weld mark is too large, it will easily affect the energy density of the electrochemical apparatus. In this application, with W8 falling within such value range, it not only can avoid the drawback when the second weld mark overlaps with the first weld mark, but also can avoid the drawback when the spacing W8 between the second side of the first weld mark and the first side of the second weld mark is too large, thereby meeting the usage requirements of the electrochemical apparatus and increasing the preparation yield of the electrochemical apparatus.

In some optional embodiments, a welding tensile strength F between the first part and the second part meets 5 N≤F≤1000 N.

When the welding tensile strength F between the first part and the second part is too small, the second part is prone to peeling off from the first part during use of the electrochemical apparatus; and when the welding tensile strength F between the first part and the second part is too large, it affects the cost of preparing the electrochemical apparatus. In this application, with the welding tensile strength F meeting the foregoing value range (that is, 5 N≤F≤1000 N), it not only can better avoid the drawback of the welding tensile strength F between the first part and the second part being too small, but also can better avoid the drawback of the welding tensile strength F between the first part and the second part being too large, thereby meeting the usage requirements of the electrochemical apparatus and increasing the preparation yield of the electrochemical apparatus.

In some optional embodiments, the welding tensile strength F between the first part and the second part meets 10 N≤F≤500 N. In this application, with the welding tensile strength F meeting the foregoing value range, it can better avoid the drawback of the welding tensile strength F between the first part and the second part being too small, and can also better avoid the drawback of the welding tensile strength F between the first part and the second part being too large, thereby meeting the usage requirements of the electrochemical apparatus and further increasing the preparation yield of the electrochemical apparatus.

In some optional embodiments, the first part and/or the second part are conductive foils, and a resistance R per square millimeter of the conductive foil meets R<20 mΩ. Based on this, the first part and/or the second part in this application can have good conductivity and meet the usage requirements of the electrochemical apparatus.

In some optional embodiments, the conductive foil includes at least one of aluminum foil, aluminum-plated foil, nickel foil, or nickel-plated foil. Based on this, with the conductive foil of such material, it can guarantee the conductivity of the first part and/or the second part of the electrode plate (especially the cathode electrode plate), thereby meeting the usage requirements of the electrochemical apparatus.

In some optional embodiments, the aluminum-plated foil includes at least one of a foil with aluminum plated on a surface of a polypropylene film and a foil with aluminum plated on a surface of a poly diethyl terephthalate film. Based on this, with the conductive foil of such material, it can guarantee the conductivity of the first part and/or the second part of the electrode plate (especially the cathode electrode plate), thereby meeting the usage requirements of the electrochemical apparatus.

In some optional embodiments, a thickness L of the second part meets 4 µm≤L≤25 µm.

When the thickness of the second part is too thin, it will increase the difficulty of the process of the electrode plate (for example, the cathode electrode plate) and cause an increase in cost. Additionally, the strength will be lower due to the thin thickness, making it difficult to meet the structural strength requirements of the electrode plate (for example, the cathode electrode plate) and the second part. When the thickness of the second part is too thick, it will also cause an increase in material costs and a decrease in energy density benefits of the electrochemical apparatus. In this application, with the thickness of the second part meeting the foregoing value range (that is, 4 µm≤L≤25 µm), it not only can better avoid the drawback of the thickness of the second part being too thin, but also can better avoid the drawback of the thickness of the second part being too thick, thereby meeting the usage requirements of the electrochemical apparatus and increasing the preparation yield of the electrochemical apparatus.

In some optional embodiments, the thickness L of the second part meets 5 µm≤L≤20 µm. In this application, with the thickness L of the second part meeting the foregoing value range, it can better avoid the drawback of the thickness of the second part being too thin, and can also better avoid the drawback of the thickness of the second part being too thick, thereby meeting the usage requirements of the electrochemical apparatus and further increasing the preparation yield of the electrochemical apparatus.

In some optional embodiments, a tensile strength S of the second part meets 80 MPa≤S≤800 MPa.

When the tensile strength of the second part is too small, it is prone to fracture during preparation, increasing the difficulty of the process of the electrode plate (for example, the cathode electrode plate) and causing an increase in cost. Additionally, a too-small tensile strength is difficult to meet the structural strength requirements of the electrode plate (for example, the cathode electrode plate) and the second part. When the tensile strength of the second part is too large, it will also increase the difficulty of the process of the electrode plate (for example, the cathode electrode plate) and cause an increase in cost. In these embodiments, with the tensile strength of the second part meeting the foregoing value range (that is, 80 MPa≤S≤800 MPa), it not only can better avoid the drawback of the tensile strength of the second part being too small, but also can better avoid the drawback of the tensile strength of the second part being too large, thereby meeting the usage requirements of the electrochemical apparatus and increasing the preparation yield of the electrochemical apparatus.

In some optional embodiments, the tensile strength S of the second part meets 100 MPa≤S≤450 MPa. In this application, with the tensile strength S of the second part meeting the foregoing value range, it can better avoid the drawback of the tensile strength of the second part being too small, and can also better avoid the drawback of the tensile strength of the second part being too large, thereby meeting the usage requirements of the electrochemical apparatus and further increasing the preparation yield of the electrochemical apparatus.

In some optional embodiments, the electrochemical apparatus is prepared by winding a cathode electrode plate, a separator, and an anode electrode plate.

A second aspect of some embodiments of this application provides an electric device, including the electrochemical apparatus according to the first aspect of this application.

The electric device in these embodiments of this application includes the electrochemical apparatus according to the first aspect. As the preparation yield of the electrochemical apparatus is high, the preparation yield of the electric device is accordingly high.

### BRIEF DESCRIPTION OF DRAWINGS

To describe technical solutions in some embodiments of this application more clearly, the following briefly describes accompanying drawings required for describing these embodiments. Apparently, the accompanying drawings in the following descriptions show merely some embodiments described in this application, and persons of ordinary skill in the art may derive other drawings from these accompanying drawings.
FIG. 1 is a schematic diagram of an electrochemical apparatus according to an example of an embodiment of this application.
FIG. 2 shows a preparation process of a cathode electrode plate of an electrochemical apparatus according to an example in the related art.
FIG. 3A shows a preparation process of a cathode electrode plate of an electrochemical apparatus according to an example of an embodiment of this application.
FIG. 3B is an enlarged schematic diagram of part T in FIG. 3A.
FIG. 4A is a schematic cross-sectional diagram of a cathode electrode plate of an electrochemical apparatus according to an example of an embodiment of this application in a thickness direction of the cathode electrode plate.
FIG. 4B is a schematic cross-sectional diagram of a cathode electrode plate of an electrochemical apparatus according to another example of an embodiment of this application in a thickness direction of the cathode electrode plate.
FIG. 4C is a schematic cross-sectional diagram of a cathode electrode plate of an electrochemical apparatus according to still another example of an embodiment of this application in a thickness direction of the cathode electrode plate.
FIG. 4D is a schematic cross-sectional diagram of an anode electrode plate of an electrochemical apparatus according to an example of an embodiment of this application in a thickness direction of the anode electrode plate.
FIG. 5 is a schematic diagram of an ultrasonic rolling welding method according to an example of an embodiment of this application.
FIG. 6 is a schematic diagram of a first weld mark according to an example of an embodiment of this application.
FIG. 7 is a schematic diagram of a first weld mark according to another example of an embodiment of this application.
FIG. 8 is a schematic diagram of a first weld mark according to still another example of an embodiment of this application.
FIG. 9 is a schematic diagram of a first weld mark according to yet another example of an embodiment of this application.
FIG. 10 is a schematic diagram of an electric device according to an example of an embodiment of this application.

### DETAILED DESCRIPTION

To make persons skilled in the art understand the technical solutions in some embodiments of this application better, the following clearly and thoroughly describes the technical solutions in some embodiments of this application with reference to the accompanying drawings in these embodiments of this application. Apparently, the described embodiments are merely some rather than all of these embodiments of this application. All other embodiments obtained by persons of ordinary skill in the art based on some embodiments of this application shall fall within the protection scope of these embodiments of this application.

The specific implementation of the electrochemical apparatus and electric device in these embodiments of this application will be described below in conjunction with the accompanying drawings. It should be noted that the structures in the accompanying drawings below are not necessarily drawn to actual scale for the sake of illustration.

It should be noted that in the content of some embodiments of this application, an example in which a lithium-ion battery is used as an electrochemical apparatus 10 is used to illustrate this application. However, the electrochemical apparatus 10 of this application is not limited to the lithium-ion battery, for example, may also be a sodium-ion battery or the like.

A first aspect of some embodiments of this application provides an electrochemical apparatus, including an electrode plate. The electrode plate includes a current collector, an active material layer arranged on a surface of the current collector, and a plurality of electrode tab connection portions, where each electrode tab connection portion includes a first part and a second part, and in an unfolded state of the electrode plate, the first parts of the plurality of electrode tab connection portions extend from an edge of the current collector along a width direction of the electrode plate and are spaced apart from each other, and the second parts are arranged on surfaces of the first parts and are electrically connected to the first parts.

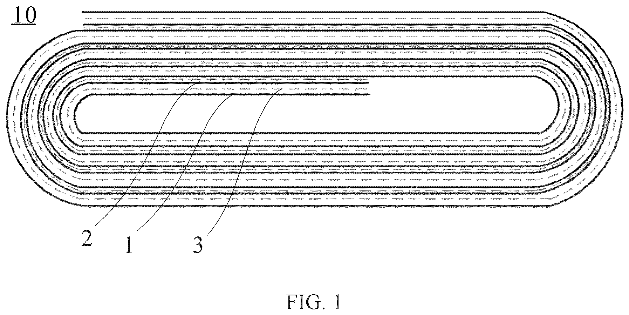

As shown in FIG. 1, an electrochemical apparatus 10 may be prepared by winding a cathode electrode plate 1, a separator 3, and an anode electrode plate 2. It should be understood that this is only for illustration and should not be regarded as any limitation to these embodiments. Specifically, after being wound into the electrochemical apparatus 10, the separator 3 is arranged between the cathode electrode plate 2 and the anode electrode plate 1 to separate the cathode electrode plate 2 from the anode electrode plate 1, which can prevent the cathode and anode electrodes from short circuits inside the electrochemical apparatus 10, can allow ions to pass through, and can maintain the function of the electrolyte among the cathode electrode plate 1, the separator 3, and the anode electrode plate 2. Optionally, the electrode plate in this application may be a cathode electrode plate 1 or an anode electrode plate 2. Referring to FIG. 1 to FIG. 9, the electrode plate being the cathode electrode plate 1 is used as an example. The electrode plate includes a current collector 11, an active material layer 12 arranged on a surface of the current collector 11, and a plurality of electrode tab connection portions 13, where each electrode tab connection portion 13 includes a first part 131 and a second part 132, and in an unfolded state of the electrode plate, the first parts 131 extend from an edge of the current collector 11 along a width direction Y of the electrode plate and are spaced apart from each other, and the second parts 132 are arranged on surfaces of the first parts 131 and are electrically connected to the first parts 131.

In this embodiment of this application, the electrode plate of the electrochemical apparatus includes a plurality of electrode tab connection portions, and each electrode tab connection portion includes a first part (that is, a blank region extending from an edge of the current collector) and a second part, where the first part is electrically connected to the second part, the electrode tab is no longer directly electrically connected to the first part, but the second part is arranged on a surface of the first part to form the electrode tab connection portion, and then the electrode tab is welded to the first part through the electrode tab connection portion. In this way, during preparation of the electrode plate of the electrochemical apparatus, the electrode tab connection portion does not need to be directly formed on the first part, which can reduce a width of the first part, thereby alleviating the problem of wrinkling during cold pressing. In addition, as it is not necessary to stretch the first part (that is, the blank region extending from the edge of the current collector) before cold pressing the electrode plate, the problem of wrinkling of the cathode electrode plate during subsequent cold pressing of the cathode electrode plate can also be alleviated. Moreover, it is not necessary to stretch the first part of the electrode plate (that is, the blank region extending from the edge of the current collector), so the cold pressing tensile strength of the electrode plate is also reduced, thereby alleviating the problem of easy fracture of the electrode plate during the cold pressing process, and thus the preparation yield of the electrochemical apparatus can be increased.

Optionally, in this embodiment, the first part 131 and the second part 132 of the electrode tab connection portions 13 of the electrode plate may be conductive foils.

Optionally, the second part 132 is apart from the active material layer 12, which can prevent the electrochemical apparatus from being too thick. Moreover, ions can pass through the separator and the active material layer but cannot pass through the second part 132 (as will be introduced below, the second part 132 may be conductive foil or the like, where the conductive foil is, for example, aluminum-plated foil), the spacing between the second part and the active material layer 12 can prevent the second part 132 from being sandwiched between the active material layer 12 (including cathode electrode active material) of the cathode electrode plate 1 and an anode electrode active material of the anode electrode plate 2, thereby preventing the ion transport between the cathode and anode electrodes.

Additionally, a second side of the first part 131 is located between a first side of the second part 132 and a second side of the second part 132, which means that the second part 132 may serve as an extension of the first part 131.

Optionally, the electrochemical apparatus in this application also includes a housing and an electrode tab 4 protruding out of the housing. The electrode tab 4 is electrically connected to the second part 132 of the electrode plate through welding.

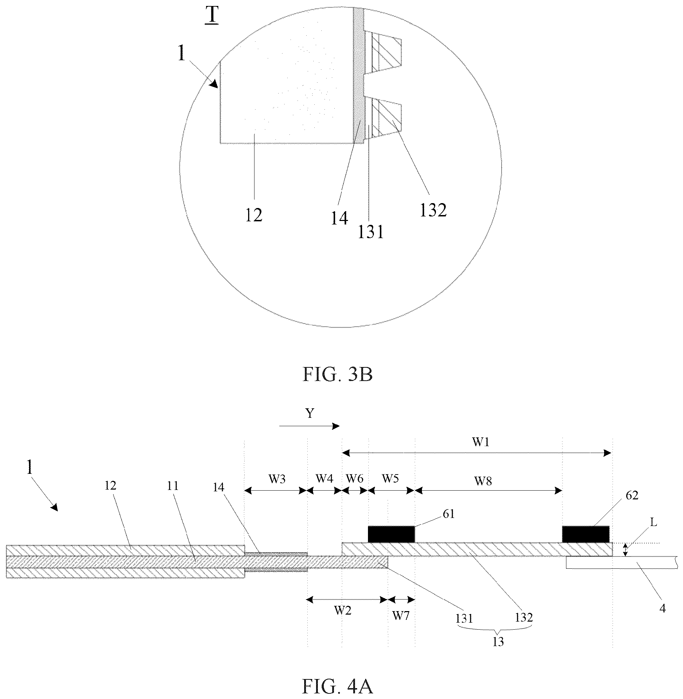

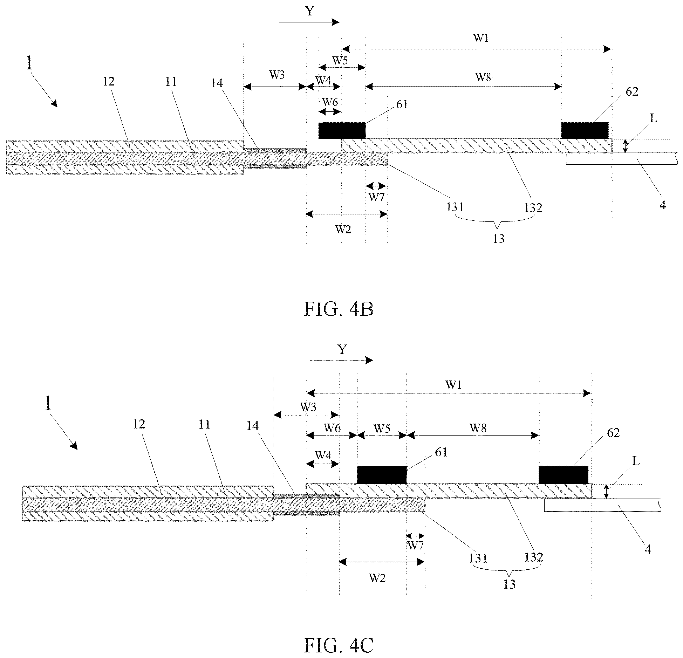

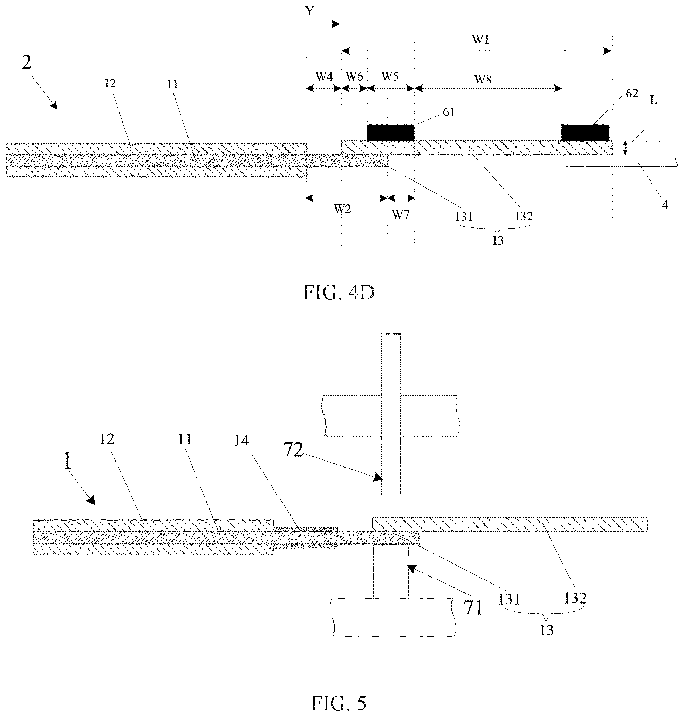

It should be understood that in any embodiment of this application, if the electrode plate is a cathode electrode plate 1, the electrode tab 4 is a cathode electrode tab, the active material layer 12 is a cathode electrode active material layer, and the current collector 11 is a cathode electrode current collector, as specifically understood in conjunction with FIGs. 4A, 4B, and 4C. If the electrode plate 4 is an anode electrode plate, the electrode tab 4 is an anode electrode tab, the active material layer 12 is an anode electrode active material layer, and the current collector 11 is an anode electrode current collector, as specifically understood in conjunction with FIG. 4D.

The anode electrode plate 2 in this embodiment may use any suitable anode electrode plate in the related art, or the anode electrode plate 2 may use the electrode plate in this application. For example, the anode electrode plate 2 may be provided with an anode electrode active material layer (for example, the anode electrode active material layer may include graphite material, silicon-based material, or the like), the anode electrode plate 2 may include an anode electrode current collector, the anode electrode current collector may include a copper material, and the anode electrode plate 2 may be further electrically connected to an anode electrode tab. Certainly, these are only examples for ease of understanding, and are not specifically limited in this embodiment. The cathode electrode tab and the anode electrode tab of the electrochemical apparatus 10 in this embodiment may be located on the same side of the electrochemical apparatus 10 or on different sides of the electrochemical apparatus 10.

Next, the preparation of the electrode plate of the electrochemical apparatus in the related art will be combined to briefly explain the electrochemical apparatus 10 in some embodiments of this application. It should be understood that this is only for ease of understanding and should not constitute any limitation to these embodiments.

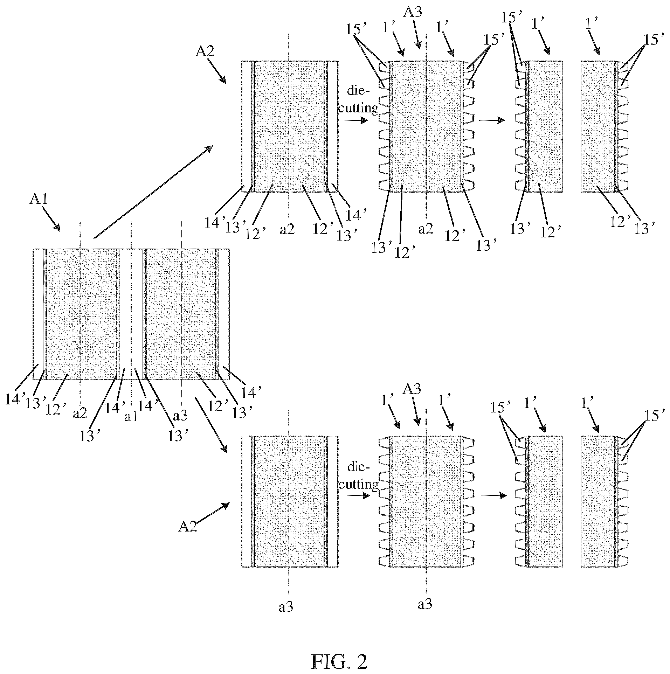

Referring to FIG. 2, a preparation process of a cathode electrode plate 1' of an electrochemical apparatus in the related art is shown. In this example, an active material layer and an insulating layer of the cathode electrode plate are coatings applied to a current collector. Referring to structure A1 in FIG. 2, this structure A1 is actually a plurality of unprocessed cathode electrode plates (in simple terms, structure A1 is cut along the dashed line a1, and then along the dashed lines a2 and a3, respectively, structure A1 is cut into four cathode electrode plates 1'. This process will be specifically explained below). After an active material layer 12' and an insulating layer 13' are applied to a current collector 11', structure A1 is obtained, and structure A1 is cold pressed (for example, a step roller (for example, a special cold pressing roller) adapted to structure A1 may be used for cold pressing. When the step roller is used, different step roller sizes need to be designed to adapt to structures A1 of different sizes. For specific details, refer to the related art for cold pressing electrode plates using step rollers, which will not be elaborated herein). During cold pressing, a thickness of an edge blank region 14' of the current collector 11' is different from deformation degrees of coating regions (that is, the insulating layer 13' and the active material layer 12'), so it easily leads to wrinkling of structure A1 during cold pressing, to be specific, the subsequently prepared cathode electrode plate 1' wrinkles. Therefore, the edge blank region 14' is generally stretched first to make its deformation tend to be consistent during cold pressing, thereby preventing wrinkling of the cathode electrode plate during subsequent cold pressing of structure A1. After the stretching and cold pressing steps are completed, the cold-pressed structure A1 is cut along the dashed line a1 (for example, laser cutting technology may be used for cutting), resulting in two structures A2 (each structure A2 is equivalent to two cathode electrode plates 1' before die-cutting). Next, the two structures A2 are die-cut on both sides close to the edge blank region 14', resulting in two structures A3 (each structure A3 is equivalent to two cathode electrode plates 1' after die-cutting). Then, the two structures A3 are cut along the dashed lines a2 and a3, respectively (for example, laser cutting technology may be used for cutting), resulting in four cathode electrode plates 1' as shown in FIG. 2, where each cathode electrode plate 1' has a plurality of electrode tab lead-out structures 15' formed by die-cutting the edge blank region 14'. In this example, the electrode tab lead-out structure 15' is trapezoidal, but this is only an example. When the electrochemical apparatus is prepared using the finally obtained cathode electrode plate 1', the cathode electrode plate 1' may be wound together with a separator, an anode electrode plate, and the like, the plurality of electrode tab lead-out structures 15' may be gathered, and the gathered electrode tab lead-out structures 15' may be electrically connected to the cathode electrode tab (for example, the electrical connection may be in a form of welding). Finally, the electrochemical apparatus is successfully prepared.

Correspondingly, the preparation of the electrode plate of the electrochemical apparatus 10 in this embodiment of this application will be combined to briefly explain the electrochemical apparatus 10 in these embodiments of this application. It should be understood that this is only for ease of understanding and should not constitute any limitation to these embodiments.

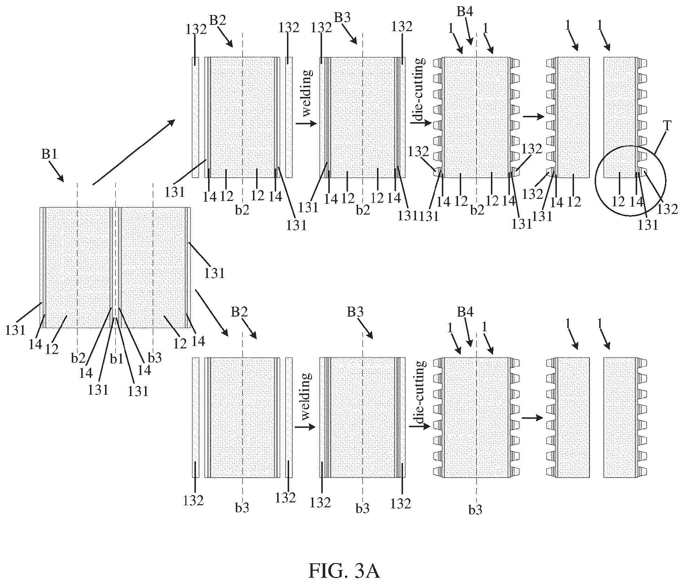

Referring to FIG. 3A, a preparation process of an electrode plate of an electrochemical apparatus 10 in this embodiment is shown (in FIG. 3A and FIG. 3B, the electrode plate being a cathode electrode plate 1 is used as an example), and FIG. 3B shows an enlarged schematic diagram of part T in FIG. 3A. In the example shown in FIG. 3A, the active material layer 12 and the insulating layer 14 of the cathode electrode plate 1 are respectively applied to the current collector 11, and the current collector 11 extends out of the first part 131. Referring to structure B1 in FIG. 3A, this structure B1 is actually a plurality of unprocessed cathode electrode plates 1 (in simple terms, structure B1 is cut along the dashed line b1, and then along the dashed lines b2 and b3, respectively, structure B1 is cut into four cathode electrode plates 1. This process will be specifically explained below). After the active material layer 12 and the insulating layer 14 are applied to the current collector 11, structure B1 is obtained, and structure B1 is cold pressed (the implementation method of cold pressing herein may be understood by referring to the related art of cold pressing the electrode plate using a cold pressing roller, which will not be elaborated herein). Comparing structure B1 in FIG. 3A and structure A1 in FIG. 2, it can be seen that because it is not necessary to stretch the edge blank region (this edge blank region is actually the first part 131 before die-cutting) of structure B1 before cold pressing, the width of the edge blank region of the current collector 11 before die cutting in structure B1 in FIG. 3A is significantly smaller than that of structure A1 in FIG. 2. After the cold pressing step is completed, the cold-pressed structure B1 is cut along the dashed line b1 (for example, laser cutting technology may be used for cutting), resulting in two structures B2. The second parts 132 are respectively welded to blank regions (that is, the first parts) extending from edges of two sides of structure B2. After welding is completed, two structures B3 are obtained (each structure B3 is equivalent to two cathode electrode plates 1 before die-cutting). Next, the two structures B3 are die-cut on two sides close to the second parts, resulting in two structures B4 (each structure B4 is equivalent to two cathode electrode plates 1 after die-cutting, with each cathode electrode plate 1 having a plurality of electrode tab connection portions 13 in this case). Then, the two structures B4 are cut along the dashed lines b2 and b3, respectively (for example, laser cutting technology may be used for cutting), resulting in four cathode electrode plates 1 as shown in FIG. 3A (refer to FIG. 3B for further understanding of the structure). When the electrochemical apparatus 10 is prepared using the finally obtained cathode electrode plate 1, the cathode electrode plate 1 may be wound together with the separator 3, the anode electrode plate 2, and the like, the plurality of die-cut second parts 132 are gathered, and the gathered second parts 132 are electrically connected to the electrode tab 4 (which is a cathode electrode tab herein) (for example, the electrical connection may be in a form of welding). Finally, the electrochemical apparatus 10 is successfully prepared.

Additionally, in this embodiment, because it is not necessary to stretch structure B1 (that is, a plurality of cathode electrode plates 1 that have not been further processed), step rollers are not required for cold pressing, and it is not necessary to design step rollers of corresponding sizes for structures B1 of different sizes for adaptation. Therefore, the service life of the cold pressing roller is improved, and the cost of cold pressing can be reduced without frequent replacement of the cold pressing roller.

Optionally, the first part 131 is made of conductive foil, and a resistance R per square millimeter of the conductive foil (that is, the first part 131) meets R<20 mΩ, thus ensuring good conductivity of the first part 131, and meeting the usage requirements of the electrochemical apparatus 10.

As mentioned above, the current collector 11 and the electrode tab connection portions 13 may also be made of conductive foil. For example, resistances per square millimeter of the conductive foils of the current collector 11 and the electrode tab connection portions 13 are less than 20 mΩ, ensuring good conductivity of the current collector 11 and the electrode tab connection portions 13, and meeting the usage requirements of the electrochemical apparatus 10.

Optionally, in this embodiment, the first part 131 and the second part 132 are welded to form an electrical connection, and the electrode tab 4 is electrically connected to the second part 132. The second part 132 may also be made of conductive foil, and optionally, a resistance R per square millimeter of the second part 132 meets R<20 mΩ, ensuring good conductivity of the second part 132, and meeting the usage requirements of the electrochemical apparatus 10.

Optionally, when the resistance R per square millimeter of the first part 131 or the second part 132 of the prepared electrochemical apparatus 10 is actually measured, the electrochemical apparatus 10 may be disassembled first, and then a clean part of the first part 131 or the second part 132 (that is, a part without insulating materials or active materials) is measured with a resistance tester. If the clean part is not available, the insulating material or active material attached to the first part 131 or the second part 132 may be washed with an organic solvent such as alcohol, and the clean part after washing may be measured with a resistance tester, or may be measured in other methods. This is not limited herein.

For the first part 131 and/or the second part 132 being conductive foils, the specific material of the conductive foil is not specifically limited in this embodiment, and any material may be used on the basis of ensuring conductive and structural strength. For example, the conductive foil includes at least one of an aluminum foil, an aluminum-plated foil, a nickel foil, or a nickel-plated foil. With the conductive foil of such material, it can guarantee the conductivity of the first part 131 and/or the second part 132 of the electrode plate (especially the cathode electrode plate 1), thereby meeting the usage requirements of the electrochemical apparatus 10.

Optionally, for the conductive foil being an aluminum-plated foil, the aluminum-plated foil includes at least one of a foil with aluminum plated on a surface of a polypropylene film and a foil with aluminum plated on a surface of a poly diethyl terephthalate film. With the conductive foil of these types, it can guarantee the conductivity of the first part 131 and/or the second part 132 of the electrode plate (especially the cathode electrode plate 1), thereby meeting the usage requirements of the electrochemical apparatus 10.

Optionally, the first part 131 and the second part 132 in this application may be made of conductive foils of the same material, or may be made of conductive foils of different materials. This is not limited herein.

Optionally, a thickness L of the second part 132 meets 4 µm≤L≤25 µm. When the thickness of the second part 132 is too thin, it will increase the difficulty of the process of the electrode plate (for example, the cathode electrode plate 1) and cause an increase in cost. Additionally, the strength will be lower due to the thin thickness, making it difficult to meet the structural strength requirements of the electrode plate (for example, the cathode electrode plate 1) and the second part 132. When the thickness of the second part 132 is too thick, it will also cause an increase in material costs and a decrease in energy density benefits of the electrochemical apparatus 10. In this embodiment, with the thickness L meeting the foregoing value range (that is, 4 µm≤L≤25 µm), it not only can better avoid the drawback of the thickness of the second part 132 being too thin, but also can better avoid the drawback of the thickness of the second part 132 being too thick, thereby meeting the usage requirements of the electrochemical apparatus 10 and increasing the preparation yield of the electrochemical apparatus 10.

Optionally, on the basis of 4 µm≤L≤25 µm, the thickness L of the second part 132 meets 5 µm≤L≤20 µm. Within this preferred value range, it can better avoid the drawback of the thickness of the second part 132 being too thin, and can also better avoid the drawback of the thickness of the second part 132 being too thick, thereby meeting the usage requirements of the electrochemical apparatus 10 and further increasing the preparation yield of the electrochemical apparatus 10.

Within the foregoing value range, an appropriate value of the thickness L of the second part 132 may be selected as needed. For example, with 5 µm≤L≤20 µm, the thickness L may be 5 µm, 7 µm, 10 µm, 15 µm, 18 µm, 20 µm, or the like. This is not limited herein.

Optionally, when the thickness L of the second part of the prepared electrochemical apparatus 10 is actually measured, the electrochemical apparatus 10 may be disassembled first, an unwelded part of the second part 132 located between a first weld mark 61 and a second weld mark 62 may be taken and then measured with a micrometer or a ten-thousandth micrometer, or may be measured in other methods. This is not limited herein.

Optionally, to ensure the strength of the second part 132, a tensile strength S of the second part 132 meets 80 MPa≤S≤800 MPa. When the tensile strength of the second part 132 is too small, it is prone to fracture during preparation, increasing the difficulty of the process of the electrode plate (for example, the cathode electrode plate 1) and causing an increase in cost. Additionally, a too-small tensile strength is difficult to meet the structural strength requirements of the electrode plate (for example, the cathode electrode plate 1) and the second part. When the tensile strength S of the second part is too large, it will also increase the difficulty of the process of the electrode plate (for example, the cathode electrode plate 1) and cause an increase in cost. In this embodiment, with the tensile strength S meeting the foregoing value range (that is, 80 MPa≤S≤800 MPa), it not only can better avoid the drawback of the tensile strength of the second part being too small, but also can better avoid the drawback of the tensile strength of the second part being too large, thereby meeting the usage requirements of the electrochemical apparatus 10 and increasing the preparation yield of the electrochemical apparatus 10.

Optionally, on the basis of 80 MPa≤S≤800 MPa, the tensile strength S of the second part 132 meets 100 MPa≤S≤450 MPa. Within this preferred value range, it can better avoid the drawback of the tensile strength of the second part being too small, and can also better avoid the drawback of the tensile strength of the second part being too large, thereby meeting the usage requirements of the electrochemical apparatus 10 and further increasing the preparation yield of the electrochemical apparatus 10.

Within the foregoing value range, an appropriate value of the tensile strength S of the second part 132 may be selected as needed. For example, when 100 MPa≤S≤450 MPa, the tensile strength S may be 100 MPa, 150 MPa, 200 MPa, 250 MPa, 300 MPa, 350 MPa, 400 MPa, 450 MPa, or the like. This is not specifically limited herein.

Optionally, a value range of the thickness of the first part 131 extending from the current collector 11 of the electrode plate may be the same as the value range of the thickness of the second part described above, meaning that the value range of the thickness of the first part 131 may be 4 µm to 25 µm, further optionally 5 µm to 20 µm. A value range of the tensile strength of the first part 131 may be the same as the value range of the tensile strength of the second part described above, meaning that the value range of the tensile strength of the first part 131 may be 80 MPa to 800 MPa, further optionally 100 MPa to 450 MPa.

When both the first part 131 and the second part 132 are conductive foils, the thickness of the first part 131 and the thickness of the second part 132 may be the same or different, and the tensile strength of the first part 131 and the tensile strength of the second part 132 may be the same or different.

Optionally, when being made of conductive foil, the current collector 11 of the electrode plate may use the same material as the first parts 131 of the electrode tab connection portions 13, and meet the same value range as the thickness of the first part 131. To be specific, the current collector 11 and/or the first parts 131 of the electrode tab connection portions 13 being made of conductive foil may be at least one of an aluminum foil, an aluminum-plated foil, a nickel foil, or a nickel-plated foil; and the aluminum-plated foil includes at least one of a foil with aluminum plated on a surface of a polypropylene film or a foil with aluminum plated on a surface of a poly diethyl terephthalate film. A value range of the thickness of the current collector 11 is 4 µm to 25 µm, preferably 5 µm to 20 µm; and a value range of the tensile strength of the current collector 11 is 80 MPa to 800 MPa, preferably 100 MPa to 450 MPa, thereby meeting the corresponding usage requirements of the electrochemical apparatus 10.

In this embodiment, when the electrode plate is a cathode electrode plate 1, the active material layer 12 arranged on the current collector 11 includes a cathode electrode active material. The type of cathode electrode active material is not limited herein. For example, it may be lithium cobalt oxide, lithium manganese oxide, lithium iron phosphate, or the like.

In some embodiments, when the electrode plate is a cathode electrode plate 1, the cathode electrode plate 1 further includes an insulating layer 14, where the insulating layer 14 is arranged on a surface of the current collector 11. In an unfolded state of the electrode plate, the active material layer 12 and the insulating layer 14 are arranged along the width direction Y of the electrode plate. The insulating layer 14 is configured to insulate and isolate the current collector 11 of the cathode electrode plate 1 from an anode electrode plate 2, which can effectively prevent short circuits between the cathode electrode plate 1 and the anode electrode plate 2.

This embodiment does not specifically limit the material of the insulating layer 14. For example, the insulating layer 14 may be made of at least one of aluminum oxide or silicon oxide. With the insulating layer 14 made of such materials to insulate and isolate the current collector 11 of the cathode electrode plate 1 from the anode electrode plate 2, it can effectively prevent short circuits between the cathode electrode plate 1 and the anode electrode plate 2. Optionally, the insulating layer 14 may be a coating (for example, aluminum oxide coating or silicon oxide coating).

In this embodiment, along the width direction Y of the electrode plate, the insulating layer 14 includes a first side close to the active material layer 12 and a second side far away from the active material layer 12. Along the width direction Y of the electrode plate, a width W3 of the insulating layer 14 meets 0.5 mm≤W3≤5 mm.

Referring to FIGs. 4A, 4B, and 4C, some example structural diagrams of the electrode plate being a cathode electrode plate 1 are shown. As the width direction Y of the electrode plate is a width direction of the current collector 11, the width W3 of the insulating layer 14 may also be understood as a distance between the first side of the insulating layer 14 and the second side of the insulating layer 14. In this embodiment, with the insulating layer 14 falling within this width range, it can effectively insulate and isolate the current collector 11 of the cathode electrode plate 1 from the anode electrode plate 2, preventing short circuits therebetween, and meeting the usage requirements of the electrochemical apparatus 10 without incurring additional costs.

In this embodiment of this application, the first part 131 and the second part 132 are welded together. In some optional embodiments, a welding tensile strength F between the first part 131 and the second part 132 meets 5 N≤F≤1000 N. When the welding tensile strength F between the first part 131 and the second part 132 is too small, the second part 132 is prone to peeling off from the first part 131 during use of the electrochemical apparatus 10; and when the welding tensile strength F between the first part 131 and the second part 132 is too large, it affects the cost of preparing the electrochemical apparatus 10. In this embodiment, with the welding tensile strength F meeting the foregoing value range (that is, 5 N≤F≤1000 N), it not only can better avoid the drawback of the welding tensile strength F between the first part 131 and the second part 132 being too small, but also can better avoid the drawback of the welding tensile strength F between the first part 131 and the second part 132 being too large, thereby meeting the usage requirements of the electrochemical apparatus 10 and increasing the preparation yield of the electrochemical apparatus 10.

Optionally, on the basis of 5 N≤F≤1000 N, the welding tensile strength F between the first part 131 and the second part 132 meets 10 N≤F≤500 N. Within this preferred value range, it can better avoid the drawback of the welding tensile strength between the first part 131 and the second part 132 being too small, and can also better avoid the drawback of the welding tensile strength between the first part 131 and the second part 132 being too large, thereby meeting the usage requirements of the electrochemical apparatus 10 and further increasing the preparation yield of the electrochemical apparatus 10.

Within the foregoing value range, an appropriate value of the welding tensile strength F may be selected as needed. For example, when 10 N≤F≤500 N, the welding tensile strength F may be 10 N, 50 N, 100 N, 200 N, 300 N, 350 N, 400 N, 500 N, or the like. This is not specifically limited herein.

For the method for testing the welding tensile strength F, refer to related art. This is not limited herein. For example, an example method for testing the welding tensile strength F may be as follows: placing the welded sample of the first part 131 and the second part 132 in a tensile testing machine, with the left clamp and the right clamp holding the first part 131 and the second part 132, respectively along the width direction Y of the electrode plate, where the left clamp and the right clamp are apart from each other at an appropriate distance (for example, 20 mm); arranging a welding region (for example, the first weld mark 61 mentioned below) in the middle between the left clamp and the right clamp, where it should be ensure that the left clamp and the right clamp do not touch the welding region (for example, the first weld mark 61 mentioned below) during the test; next, fixing the left clamp and pulling the right clamp along a direction away from the left clamp at an appropriate speed (for example, 1 mm/s); and then checking whether the fracture occurs in the welding region after pulling, if the fracture occurs in the welding region, determining a corresponding welding tensile strength F in this case, and if the fracture does not occur in the welding region, replacing the sample for testing again. Certainly, this is only an example and does not impose any limitations on these embodiments.

In this embodiment of this application, the first part 131 and the second part 132 may be welded in any welding method, such as ultrasonic rolling welding. Referring to FIG. 5, FIG. 5 shows an ultrasonic rolling welding method, in which the first part 131 and the second part 132 are first partially overlapped and placed on a rolling welding holder 71, next, a rolling welding head 72 is aligned with the second part 132 and the first part 131 above the rolling welding holder 71, and then ultrasonic welding is performed. During welding, the rolling welding head 72 emits highfrequency ultrasonic waves to the second part 132 and the first part 131. When the rolling welding head 72 applies pressure to the two, the contact surfaces of the second part 132 and the first part 131 rub against each other to generate heat energy. This heat energy causes the welding position of the second part 132 and the first part 131 to melt, thereby finally forming a welded connection between the second part 132 and the first part 131. Certainly, this is only an example in these embodiments of this application and does not impose any limitations on this application.

In some optional embodiments, in the electrochemical apparatus 10, the first part 131 and the second part 132 are electrically connected through welding, and a first weld mark 61 is formed when the first part 131 and the second part 132 are welded together; and along the width direction Y of the electrode plate, the first weld mark 61 includes a first side close to the active material layer 12 and a second side far away from the active material layer 12, where the second side of the first weld mark 61 is located on the second part 132, and the first weld mark 61 is apart from the active material layer 12.

Specifically, the first part 131 and the second part 132 are electrically connected through welding, which can ensure the stability of the electrical connection between the second part 132 and the first part 131. The second side of the first weld mark 61 is located on the second part 132, ensuring that the second part 132 can form a stable welding connection with the first part 131.

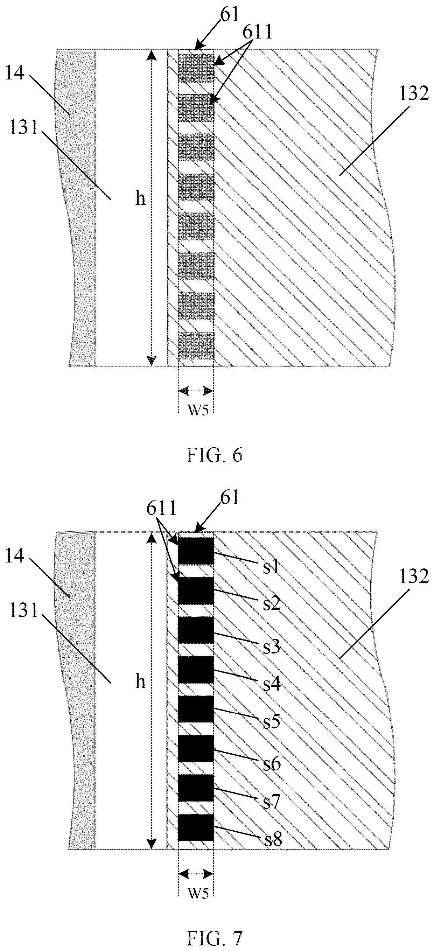

In this embodiment, the shape of the first weld mark 61 is not limited. For example, as shown in FIGs. 6 and 7, the first weld mark 61 may be a combination of a plurality of sub-weld marks 611 with a spacing between every two adjacent sub-weld marks 611. The sub-weld mark 611 may be formed by combining a plurality of small weld spots of regular or irregular shapes. For example, the small weld spots may be circular, rectangular, or in other polygonal shapes. Optionally, the shape of the sub-weld mark 611 formed by the arrangement of the small weld spots may be a polygon such as a parallelogram, a rectangle (which may be a square), or a triangle, or may be in other irregular shapes. For example, as shown in FIG. 6, the sub-weld mark 611 is in a shape of a rectangle composed of small weld spots, where the small weld spots are rectangular. Alternatively, as shown in FIG. 7, each sub-weld mark 611 may be a complete weld mark. This is not limited herein.

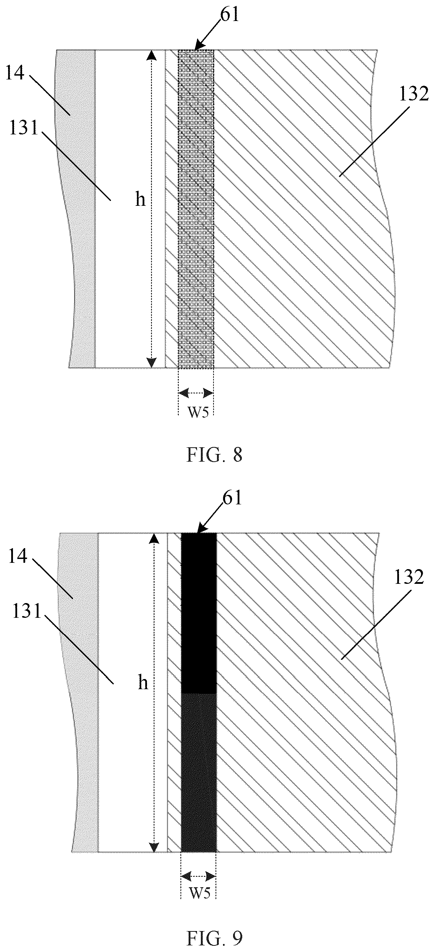

For example, as shown in FIGs. 8 and 9, the first weld mark 61 may alternatively be a continuous weld mark. The continuous weld mark may be a complete weld mark (where the complete weld mark may be understood in conjunction with FIG. 9, which will not be elaborated herein). Alternatively, the continuous weld mark may also include a plurality of small weld spots of regular or irregular shapes. For example, the small weld spot may be circular, rectangular, or in other polygonal shapes (which may be understood in conjunction with FIG. 8 and will not be elaborated herein). In this embodiment, this is not limited herein.

Optionally, in this embodiment, for a case in which the first weld mark 61 is a combination of a plurality of sub-weld marks 611 with a spacing between every two adjacent sub-weld marks 611, a weld mark area ratio P>20% is met, where the weld mark area ratio P=Sy/Sz, where Sy is a sum of areas of all sub-weld marks 611 of the first weld mark 61, and Sz is a total area of the welding region (that is, a sum of areas of all sub-weld marks 611 plus a sum of areas of spacings between all sub-weld marks 611).

Specifically, Sy and Sz may be understood in conjunction with a case in which the sub-weld marks 611 in FIG. 7 are complete weld marks. Herein, Sz=h*W5, and Sy=s1+s2+s3+s4+s5+s6+s7+s8, where s1, s2, s3, s4, s5, s6, s7, and s8 are areas of the various sub-weld marks. Thus, the weld mark area ratio P=Sy/Sz=(s1+s2+s3+s4+s5+s6+s7+s8)/(h*W5)>20%. Additionally, as will be introduced below, W5 is a distance between the first side of the first weld mark 61 and the second side of the first weld mark 61, that is, the width of the first weld mark 61.

Similarly, for FIG. 6 in which each sub-weld mark 611 may include a plurality of small weld spots of regular or irregular shapes, Sz=h*W5, and Sy is equal to the sum of the areas of all small weld spots. It can still be understood with reference to the explanation of FIG. 7, which will not be elaborated herein.

Certainly, in other embodiments, based on the needs of the electrochemical apparatus 10, the weld mark area ratio P may alternatively be less than 20%. This is not specially limited herein.

In some optional embodiments, referring to FIGs. 4A, 4B, 4C, and 4D, along the width direction Y of the electrode plate, the width W5 of the first weld mark 61 meets 0.1 mm≤W5≤10 mm. It can be understood that the width W5 of the first weld mark 61 is the distance between the first side of the first weld mark 61 and the second side of the first weld mark 61 along the width direction Y of the electrode plate. The width (that is, W5) of the first weld mark 61 may also be understood in conjunction with FIGs. 6, 7, 8, and 9.

When the width of the first weld mark 61 is too small (that is, W5<0.1 mm), it is difficult to ensure that the welding tensile strength between the first part 131 and the second part 132 meets the requirements, resulting in the drawback of the welding tensile strength F being too small. In addition, when the width of the first weld mark 61 is too large (that is, W5>10 mm), it is difficult to gather the die-cut second part 132 after the die-cutting of the first part 131 (that is, a blank region extending from an edge of the current collector 11) and the second part 132 of the electrode plate (for example, the cathode electrode plate 1), which additionally increases the cost. In this application, with the width (W5) of the first weld mark 61 meeting the foregoing value range (0.1 mm≤W5≤10 mm), it can avoid the drawback of the width of the first weld mark 61 being too small, and can also avoid the drawback of the width of the first weld mark 61 being too large, thereby meeting the usage requirements of the electrochemical apparatus 10 and increasing the preparation yield of the electrochemical apparatus 10.

It should be understood that the electrode plates shown in FIGs. 4A, 4B, and 4C are cathode electrode plates 1, and the electrode plate shown in FIG. 4D is an anode electrode plate 2. This is only for illustrating the electrode plate of the electrochemical apparatus in these embodiments and should not constitute any limitation to this application.

Within the foregoing value range, an appropriate value of the width W5 of the first weld mark 61 may be selected as needed. For example, when 0.1 mm≤W5≤10 mm, W5 may be 0.1 mm, 1 mm, 3 mm, 5 mm, 8 mm, 10 mm, or the like. This is not limited herein.

In some optional embodiments, referring to FIGs. 4A, 4B, 4C, and 4D, if the first side of the first weld mark 61 is located on the first part 131, a spacing W6 between the first side of the first weld mark 61 and the first side of the second part 132 meets 0 mm≤W6≤5 mm; or if the first side of the first weld mark 61 is located on a surface of the second part 132, a spacing W6 between the first side of the first weld mark 61 and the first side of the second part 132 meets 0 mm≤W6≤30 mm.

Specifically, referring to FIG. 4B, FIG. 4B shows an example in which the first side of the first weld mark 61 is located on the first part 131 (it should be noted that in FIG. 4B, although the first side of the first weld mark 61 is not in contact with the first part 131 and there is a spacing therebetween, the actual expression of FIG. 4B is that the first side of the first weld mark 61 is directly in contact with the first part 131 to be located on the first part 131, so that the second part 132 and the first part 131 are welded. This is shown to facilitate the illustration of the structure and should not constitute any limitation to this application). When the first side of the first weld mark 61 is located on the first part 131, it is equivalent that the first side of the first weld mark 61 exceeds the first side of the second part 132 along an opposite direction of the width direction Y of the electrode plate. In this case, the first weld mark 61 covers the first side of the second part 132. Referring to FIGs. 4A, 4C, and 4D, when the first side of the first weld mark 61 is located on the surface of the second part 132, it is equivalent that the first side of the first weld mark 61 exceeds the first side of the second part 132 along the width direction Y of the electrode plate. In this case, the first side of the second part 132 is not covered by the first weld mark 61, and the first side of the second part 132 may be in an unconstrained state, in other words, the first side of the second part 132 is not welded to the first part 131. It should be understood that the electrode plates shown in FIGs. 4A, 4B, and 4C are cathode electrode plates 1, and the electrode plate shown in FIG. 4D is an anode electrode plate 2. This is only for illustrating the electrode plate of the electrochemical apparatus in these embodiments and should not constitute any limitation to this application.

When the first side of the first weld mark 61 exceeds the first side of the second part 132 too large along the opposite direction of the width direction Y of the electrode plate (For example, when the first side of the first weld mark 61 is located on the first part 131, W6>5 mm), there will be a large proportion of parts without active material (for example, cathode electrode active material). Therefore, the proportion of space that cannot provide energy is also large, causing significant energy density loss, affecting the subsequent electrical connection of the electrode tab 4 (for example, a cathode electrode tab) to the second part 131 (for example, the electrode tab 4 (for example, the cathode electrode tab) and the second part 132 are electrically connected through welding), and affecting the gathering of the die-cut second part 132. In this process, the second part 132 is also easily damaged, which ultimately affects the electrical performance of the manufactured electrochemical apparatus 10. When the first side of the first weld mark 61 exceeds the first side of the second part 132 too large along the width direction Y of the electrode plate (for example, when the first side of the first weld mark is located on the surface of the second part 132, W6>30 mm), the second part 132 in an unconstrained state is too wide, which affects die cutting during the preparation the electrode plate (for example, the cathode electrode plate 1), increases the difficulty of the process, and affects the preparation rate of the electrochemical apparatus 10.

In this application, with W6 falling within such value range, it not only can avoid the drawback when the first side of the first weld mark 61 exceeds the first side of the second part 132 too large along the opposite direction of the width direction Y of the electrode plate, but also avoid the drawback when the first side of the first weld mark 61 exceeds the first side of the second part 132 too large along the width direction of the electrode plate, thereby meeting the usage requirements of the electrochemical apparatus 10 and increasing the preparation yield of the electrochemical apparatus 10.

Optionally, based on the foregoing value range, if the first side of the first weld mark 61 is located on the first part 131, the spacing W6 between the first side of the first weld mark 61 and the first side of the second part 132 meets 0 mm≤W6≤3 mm; or if the first side of the first weld mark 61 is located on the surface of the second part 132, the spacing W6 between the first side of the first weld mark 61 and the first side of the second part 132 meets 0 mm≤W6≤10 mm. Within this preferred value range, it can avoid the drawback when the first side of the first weld mark 61 exceeds the first side of the second part 132 too large along the opposite direction of the width direction Y of the electrode plate, and can also avoid the drawback when the first side of the first weld mark 61 exceeds the first side of the second part 132 too large along the width direction Y of the electrode plate, thereby meeting the usage requirements of the electrochemical apparatus 10 and further increasing the preparation yield of the electrochemical apparatus 10.

Within the foregoing value range, an appropriate value of W6 may be selected as needed. For example, when the first side of the first weld mark 61 is located on the first part 131, and 0 mm≤W6≤3 mm, W6 may be 0 mm, 0.5 mm, 1 mm, 1.5 mm, 2 mm, 2.5 mm, 3.0 mm, or the like. This is not specifically limited herein. For example, when the first side of the first weld mark 61 is located on the surface of the second part 132, and 0 mm≤W6≤10 mm, W6 may be 0 mm, 1 mm, 3 mm, 5 mm, 7 mm, 8 mm, 10 mm, or the like. This is not limited herein.

In some optional embodiments, referring to FIGs. 4A, 4B, 4C, and 4D, if a first projection of the second side of the first weld mark 61 on the second part 132 overlaps with a second projection of the first part 131 on the second part 132, a spacing W7 between the second side of the first weld mark 61 and the second side of the first part 131 meets 0 mm≤W7≤15 mm; or if a first projection of the second side of the first weld mark 61 on the second part 132 does not overlap with a second projection of the first part 131 on the second part 132, a spacing W7 between the second side of the first weld mark 61 and the second side of the first part 131 meets 0 mm≤W7≤7 mm.

It is easy to understand that the first projection may be a projection of the second side of the first weld mark 61 on the second part 132 along a thickness direction of the second part 132, and the second projection may be a projection of the first part 131 on the second part 132 along the thickness direction of the second part 132.

Specifically, referring to FIGs. 4B and 4C, when the first projection overlaps with the second projection, it is equivalent that the second side of the first part 131 exceeds the second side of the first weld mark 61 along the width direction Y of the electrode plate, and the second side of the first part 131 is in an unconstrained state, in other words, the second side of the first part 131 is not welded to the second part 132. Referring to FIGs. 4A and 4D, when the first projection does not overlap with the second projection, it is equivalent that the second side of the first part 131 does not exceed the second side of the first weld mark 61 along the width direction Y of the electrode plate, and the second side of the first part 131 is welded to the second part 132. It should be understood that the electrode plates shown in FIGs. 4A, 4B, and 4C are cathode electrode plates 1, and the electrode plate shown in FIG. 4D is an anode electrode plate 2. This is only for illustrating the electrode plate of the electrochemical apparatus in these embodiments and should not constitute any limitation to this application.

When the first projection overlaps with the second projection, and the spacing W7 between the second side of the first weld mark 61 and the second side of the first part 131 is too large (for example, when the first projection overlaps with the second projection, W7>15 mm), to be specific, when the second side of the first part 131 exceeds the second side of the first weld mark 61 too large along the width direction Y of the electrode plate, the first part 131 in the unconstrained state is too wide, which affects die cutting during the preparation of the electrode plate (for example, the cathode electrode plate 1), increases the difficulty of the process, and affects the preparation yield of the electrochemical apparatus 10. When the first projection does not overlap with the second projection, and the spacing W7 between the second side of the first weld mark 61 and the second side of the first part 131 is too large (for example, when the first projection does not overlap with the second projection, W7>7 mm), to be specific, when the second side of the first weld mark 61 exceeds the second side of the first part 131 too large along the width direction Y f the electrode plate, it causes significant energy density loss, affects the subsequent electrical connection of the electrode tab 4 (for example, a cathode electrode tab) to the second part 132 (for example, the electrode tab 4 (for example, the cathode electrode tab) and the second part 132 are electrically connected through welding), and affects the gathering of the die-cut second part 132. In this process, the second part 132 is also easily damaged, which ultimately affects the electrical performance of the manufactured electrochemical apparatus 10.

In these embodiments of this application, with W7 falling within such value range, it not only can avoid the drawback when the second side of the first part 131 exceeds the second side of the first weld mark 61 too large along the width direction Y of the electrode plate, but also can avoid the drawback when the second side of the first weld mark 61 exceeds the second side of the first part 131 too large along the width direction Y of the electrode plate, thereby meeting the usage requirements of the electrochemical apparatus 10 and increasing the preparation yield of the electrochemical apparatus 10.

Optionally, based on the foregoing value range, if the first projection of the second side of the first weld mark 61 on the second part 132 overlaps with the second projection of the first part 131 on the second part 132, the spacing W7 between the second side of the first weld mark 61 and the second side of the first part 131 meets 0 mm≤W7≤10 mm; or if the first projection of the second side of the first weld mark 61 on the second part 132 does not overlap with the second projection of the first part 131 on the second part 132, the spacing W7 between the second side of the first weld mark 61 and the second side of the first part 131 meets 0 mm≤W7≤3 mm. Within this preferred value range, it can avoid the drawback when the second side of the first part 131 exceeds the second side of the first weld mark 61 too large along the width direction of the electrode plate, and can also avoid the drawback when the second side of the first weld mark 61 exceeds the second side of the first part 131 too large along the width direction of the electrode plate, thereby meeting the usage requirements of the electrochemical apparatus 10 and increasing the preparation yield of the electrochemical apparatus 10.

Within the foregoing value range, an appropriate value of W7 may be selected as needed. For example, when the first projection overlaps with the second projection and 0 mm≤W7≤10 mm, W7 may be 0 mm, 1 mm, 3 mm, 5 mm, 8 mm, 9 mm, 10 mm, or the like. This is not specifically limited herein. For example, when the first projection does not overlap with the second projection and 0 mm≤W7≤3 mm, W7 may be 0 mm, 0.5 mm, 1 mm, 1.5 mm, 2 mm, 2.5 mm, 3 mm, or the like. This is not specifically limited herein.

In some optional embodiments, referring to FIGs. 4A, 4B, 4C, and 4D, the electrochemical apparatus 10 further includes a housing and an electrode tab 4 extending out of the housing, where the electrode tab 4 is electrically connected to the second part 132 through welding, and a second weld mark 62 is formed on the second part 132; and along the width direction Y of the electrode plate, the second weld mark 62 includes a first side close to the active material layer 12 and a second side far away from the active material layer 12; where a spacing W8 between the second side of the first weld mark 61 and the first side of the second weld mark 62 meets 0 mm<W8≤10 mm.

In this application, the specific welding process when the electrode tab 4 is welded to the second part 132 is not limited. For example, the welding process may be transfer welding, and the second weld mark 62 may be a transfer weld mark.

It should be understood that the electrode plates shown in FIGs. 4A, 4B, and 4C are cathode electrode plates 1, and the electrode plate shown in FIG. 4D is an anode electrode plate 2. This is only for illustrating the electrode plate of the electrochemical apparatus in these embodiments and should not constitute any limitation to this application.

In any embodiment of this application, the electrode plate of the electrochemical apparatus 10 may be a cathode electrode plate 1 and/or an anode electrode plate 2. When the electrode plate of the electrochemical apparatus is a cathode electrode plate 1, the electrode tab 4 electrically connected to the second part 132 of the cathode electrode plate 1 through welding is a cathode electrode tab; and when the electrode plate of the electrochemical apparatus is an anode electrode plate 2, the electrode tab 4 electrically connected to the second part 132 of the anode electrode plate 2 through welding is an anode electrode tab.

Optionally, for the housing, the cathode electrode plate 1, the separator 3, and the anode electrode plate 2 may be arranged inside the housing, and the housing can provide protection for them. Optionally, for a pouch cell, the housing may be made of metal-plastic film, and the metal-plastic film may be steel-plastic film, aluminum-plastic film, or the like.

When the electrode tab 4 (for example, a cathode electrode tab) is electrically connected to the second part 132 through welding, the second weld mark 62 formed on the second part 132 and the first weld mark 61 cannot overlap. If they overlap, it will affect the welding effect between the electrode tab 4 (for example, the cathode electrode tab) and the second part 132, and reduce the welding tensile strength therebetween. In addition, if the spacing W8 between the second side of the first weld mark 61 and the first side of the second weld mark 62 is too large (for example, W8>10 mm), it will easily affect the energy density of the electrochemical apparatus 10. In these embodiments, with W8 falling within such value range, it not only can avoid the drawback when the second weld mark 62 overlaps with the first weld mark 61, but also can avoid the drawback when the spacing W8 between the second side of the first weld mark 61 and the first side of the second weld mark 62 is too large, thereby meeting the usage requirements of the electrochemical apparatus 10 and increasing the preparation yield of the electrochemical apparatus 10.

Within the foregoing value range, an appropriate value of W8 may be selected as needed. For example, when 0 mm<W8≤10 mm, W8 may be 1 mm, 3 mm, 5 mm, 7 mm, 9 mm, 10 mm, or the like. This is not specifically limited herein.

In these embodiments of this application, the width of the second part 132 is not limited (referring to FIGs. 4A, 4B, 4C, and 4D, the width W1 of the second part 132 is the distance between the first side of the second part 132 and the second side of the second part 132 along the width direction Y of the electrode plate), provided that it meets the requirements of the electrochemical apparatus 10. In some optional embodiments, along the width direction Y of the electrode plate, the width W1 of the second part 132 meets 3 mm≤W1≤35 mm.

When the width of the second part 132 is too small, it is difficult to weld the second part 132 to the first part 131 during preparation of the electrochemical apparatus 10; and when the width of the second part 132 is too large, during preparation of the electrode plate (for example, a cathode electrode plate 1), an edge of the second part 132 is prone to collapse during die cutting, thereby affecting the die cutting accuracy. In particular, when the die cutting operation is performed by laser cutting, the laser focus is seriously away from the cutting surface, which is also prone to continuous cutting and accidental breakage of the second part 132. In these embodiments, with the width of the second part 132 meeting the foregoing value range (that is, 3 mm≤W1≤35 mm), it not only can better avoid the drawback of the width of the second part 132 being too small, but also can avoid the drawback of the width of the second part 132 being too large, thereby meeting the usage requirements of the electrochemical apparatus 10 and increasing the preparation yield of the electrochemical apparatus 10.

It should be understood that the electrode plates shown in FIGs. 4A, 4B, and 4C are cathode electrode plates 1, and the electrode plate shown in FIG. 4D is an anode electrode plate 2. This is only for illustrating the electrode plate of the electrochemical apparatus in these embodiments and should not constitute any limitation to this application.

Optionally, on the basis of 3 mm≤W1≤35 mm, along the width direction Y of the electrode plate, the width W1 of the second part 132 meets 5 mm≤W1≤25 mm. Within this preferred value range, it can avoid the drawback of the width of the second part 132 being too small, and can also better avoid the drawback of the width of the second part 132 being too large, thereby meeting the usage requirements of the electrochemical apparatus 10 and further increasing the preparation yield of the electrochemical apparatus 10.

Within the foregoing value range, an appropriate value of the width W1 of the second part 132 may be selected as needed. For example, when 5 mm≤W1≤25 mm, W1 may be 5 mm, 10 mm, 15 mm, 18 mm, 20 mm, 23 mm, 25 mm, or the like. This is not limited herein.

In these embodiments of this application, the width of the first part 131 (that is, the first part 131 of the electrode tab connection portion 13) extending from the current collector 11 is not limited (referring to FIGs. 4A, 4B, 4C, and 4D, the width W2 of the first part 131 is the distance between the first side of the first part 131 and the second side of the first part 131 along the width direction Y of the electrode plate), provided that it meets the requirements of the electrochemical apparatus 10. In some optional embodiments, along the width direction Y of the electrode plate, a width W2 of the first part 131 meets 0.5 mm≤W2≤20 mm.

When the width of the first part 131 is too small, it is difficult to ensure the welding width during the preparation of the electrochemical apparatus 10, making it more difficult to weld the second part 132 to the first part 131. When the width of the first part 131 is too large, the first part 131 is more prone to wrinkling after cold pressing during the preparation of the electrode plate (for example, the cathode electrode plate 1), affecting the gathering of the second part 132 welded on the first part 131 after die-cutting, which will increase energy density loss and cause an increase in cost. In these embodiments, with the width of the first part 131 meeting the foregoing value range (that is, 0.5 mm≤W2≤20 mm), it not only can better avoid the drawback of the width of the first part 131 being too small, but also can better avoid the drawback of the width of the first part 131 being too large, thereby meeting the usage requirements of the electrochemical apparatus 10 and increasing the preparation yield of the electrochemical apparatus 10.

It should be understood that the electrode plates shown in FIGs. 4A, 4B, and 4C are cathode electrode plates 1, and the electrode plate shown in FIG. 4D is an anode electrode plate 2. This is only for illustrating the electrode plate of the electrochemical apparatus in these embodiments and should not constitute any limitation to this application.

Optionally, on the basis of 0.5 mm≤W2≤20 mm, along the width direction Y of the electrode plate, the width W2 of the first part 131 meets 1 mm≤W2≤10 mm. Within this preferred value range, it can avoid the drawback of the width of the first part 131 being too small, and can also better avoid the drawback of the width of the first part 131 being too large, thereby meeting the usage requirements of the electrochemical apparatus 10 and further increasing the preparation yield of the electrochemical apparatus 10.

Within the foregoing value range, an appropriate value of the width (that is, W2) of the first part 131 may be selected as needed. For example, when 1 mm≤W2≤10 mm, W2 may be 1 mm, 3 mm, 4 mm, 5 mm, 7 mm, 8 mm, 10 mm, or the like. This is not limited herein.

In some optional embodiments, referring to FIGs. 4A, 4B, and 4C, along the width direction Y of the electrode plate, the insulating layer 14 includes a first side close to the active material layer 12 and a second side far away from the active material layer 12. If a first side of the second part 132 is located on the insulating layer 14, a spacing W4 between the first side of the second part 132 and the second side of the insulating layer 14 meets 0 mm≤W4≤8 mm; or if a first side of the second part 132 is located on a surface of the first part 131, a spacing W4 between the first side of the second part 132 and the second side of the insulating layer 14 meets 0 mm≤W4≤10 mm.

Specifically, referring to FIG. 4C, when the electrode plate is a cathode electrode plate 1 and the first side of the second part 132 is located on the insulating layer 14, it is equivalent that a first end of the second part 132 exceeds a first side of the first part 131 along the opposite direction of the width direction Y of the electrode plate after the second part 132 is welded to the first part 131. When the excess is too large (for example, W4>8 mm), it is easy to cause a thickness of the electrochemical apparatus 10 to be too large. Referring to FIGs. 4A and 4B, when the electrode plate is a cathode electrode plate 1, the first side of the second part 132 is located on the surface of the first part 131, the spacing W4 between the first side of the second part 132 and the second side of the insulating layer 14 is too large (for example, W4>10 mm), the problem of folding after the first part 131 and the second part 132 are welded together cannot be effectively solved.

In these embodiments, with W4 meeting the foregoing value range, it not only can avoid the drawback when the first end of the second part 132 exceeds the first side of the first part 131 too large along the opposite direction of the width direction Y of the electrode plate, but also can avoid the drawback when the first side of the second part 132 is located on the first part 131 and W4 is too large, thereby meeting the usage requirements of the electrochemical apparatus 10 and increasing the preparation yield of the electrochemical apparatus 10.

When the first side of the second part 132 is apart from the insulating layer 14, it is a more preferred embodiment. Optionally, when the first side of the second part 132 is located on the surface of the first part 131, the spacing W4 between the first side of the second part 132 and the second side of the insulating layer 14 meets 0 mm≤W4≤5 mm. Within this preferred value range, it can avoid the drawback of W4 being too large when the first side of the second part 132 is located on the first part 131, thereby meeting the usage requirements of the electrochemical apparatus 10 and further increasing the preparation yield of the electrochemical apparatus 10.

It should be understood that the foregoing content is only some optional examples of the electrochemical apparatus 10 in some embodiments of this application and should not constitute any limitation to the electrochemical apparatus 10 in some embodiments of this application.

Based on the foregoing content, it can be learned that the electrochemical apparatus provided in this application, as the electrode plate of the electrochemical apparatus includes a plurality of electrode tab connection portions. Each electrode tab connection portion includes a first part (that is, a blank region extending from an edge of the current collector) and a second part, where the first part is electrically connected to the second part, the electrode tab is no longer directly electrically connected to the first part, but the second part is arranged on a surface of the first part to form the electrode tab connection portion, and then the electrode tab is welded to the first part through the electrode tab connection portion. In this way, during preparation of the electrode plate of the electrochemical apparatus, the electrode tab connection portion does not need to be directly formed on the first part, which can reduce a width of the first part, thereby alleviating the problem of wrinkling during cold pressing. In addition, as it is not necessary to stretch the first part (that is, the blank region extending from the edge of the current collector) before cold pressing the electrode plate, the problem of wrinkling of the cathode electrode plate during subsequent cold pressing of the cathode electrode plate can also be alleviated. Moreover, it is not necessary to stretch the first part of the electrode plate (that is, the blank region extending from the edge of the current collector), so the cold pressing tensile strength of the electrode plate is also reduced, thereby alleviating the problem of easy fracture of the electrode plate during the cold pressing process, and thus the preparation yield of the electrochemical apparatus can be increased.

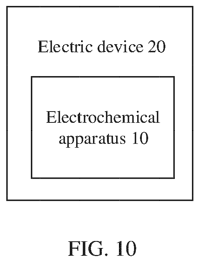

According to a second aspect of some embodiments of this application, referring to the structural block diagram of FIG. 10, an embodiment of this application provides an electric device 20, where the electric device 20 includes the electrochemical apparatus 10 of any one of the foregoing first aspect.

Specifically, the electrochemical apparatus 10 may be configured to supply power for various electric means in the electric device 20.

The electric device 20 in this embodiment of this application includes the foregoing electrochemical apparatus 10. As the preparation yield of the electrochemical apparatus 10 is high, the preparation yield of the electric device 20 is accordingly high.

Some actual examples of the electrochemical apparatus 10 in this application and some comparative examples of electrochemical apparatuses in the related art will be described below. By comparing these examples and comparative examples, the beneficial effects of the electrochemical apparatus 10 in some embodiments of this application relative to the related art can be more obviously seen. In these examples and comparative examples, the electrochemical apparatus being a lithium-ion battery is used as an example.

The relevant data are listed in Table 1 below. In Table 1, the electrochemical apparatuses of Comparative Examples 1 and 2 are conventional winding structures. Additionally, in Examples 1 to 23 and Comparative Examples 3 and 4, compared to Comparative Examples 1 and 2, the stretching on the edge blank region of the current collector was canceled before cold pressing the cathode electrode plate. Instead, the second part was welded onto the edge blank region (that is, the first part) extending from the current collector, the step roller was canceled during the cold pressing process, and all other parameters remained the same.

**Table 1**

| No. | L (µm) | S (MPa) | W2 (mm) | W4 (mm) | W1 (mm) | W6 (mm) | W5 (mm) | Welding tensile strength (F/N) | W8 (mm) | Folding ratio of electrode tab | Strip breakage rate of cathode electrode plate | Wrinkling after cold pressing |
|---|---|---|---|---|---|---|---|---|---|---|---|---|
| Comparative Example 1 | 13 | 360 | \ | \ | \ | \ | \ | \ | \ | 1.00% | 3.20% | ★★ |
| Comparative Example 2 | 13 | 360 | \ | \ | \ | \ | \ | \ | \ | 1.00% | 3.30% | ★★ |
| Example 1 | 13 | 360 | 0.5 | 2 | 10 | 0 | 3 | 310 | 5 | 0 | 0 | \ |
| Example 2 | 13 | 360 | 5 | 2 | 10 | 0 | 3 | 315 | 5 | 0 | 0 | \ |
| Example 3 | 13 | 360 | 10 | 2 | 10 | 0 | 3 | 316 | 5 | 0.01% | 0.34% | |
| Example 4 | 13 | 360 | 20 | 2 | 10 | 0 | 3 | 297 | 5 | 0.02% | 1% | ★ |
| Comparative Example 3 | 13 | 360 | 30 | 2 | 10 | 0 | 3 | 313 | 5 | 0.05% | 2% | ★★★ |
| Example 5 | 13 | 360 | 5 | -2 | 10 | 0 | 3 | 333 | 5 | 0.01% | 0 | \ |
| Example 6 | 13 | 360 | 5 | 5 | 10 | 0 | 3 | 313 | 5 | 0.02% | 0 | \ |
| Example 7 | 13 | 360 | 5 | 10 | 10 | 0 | 3 | 299 | 5 | 0.02% | 0 | \ |
| Example 8 | 13 | 360 | 5 | 2 | 3 | 0 | 3 | 311 | 5 | 0 | 0 | \ |
| Example 9 | 13 | 360 | 5 | 2 | 5 | 0 | 3 | 293 | 5 | 0 | 0 | \ |
| Example 10 | 13 | 360 | 5 | 2 | 15 | 0 | 3 | 315 | 5 | 0.05% | 0 | \ |
| Example 11 | 13 | 360 | 5 | 2 | 25 | 0 | 3 | 311 | 5 | 0.1% | 0 | \ |
| Example 12 | 13 | 360 | 5 | 2 | 35 | 0 | 3 | 305 | 5 | 0.3% | 0 | \ |
| Comparative Example 4 | 13 | 360 | 5 | 2 | 40 | 0 | 3 | 307 | 5 | 0.4% | 0 | \ |
| Example 13 | 13 | 360 | 5 | 2 | 10 | -3 | 3 | 319 | 5 | 0 | 0 | \ |
| Example 14 | 13 | 360 | 5 | 2 | 10 | 5 | 3 | 311 | 5 | 0.01% | 0 | \ |
| Example 15 | 13 | 360 | 5 | 2 | 10 | 20 | 3 | 295 | 5 | 0.10% | 0 | \ |
| Example 16 | 13 | 360 | 5 | 2 | 10 | 0 | 0.2 | 31 | 5 | 0.05% | 0 | \ |
| Example 17 | 13 | 360 | 5 | 2 | 10 | 0 | 10 | 987 | 5 | 0 | 0 | \ |
| Example 18 | 13 | 360 | 5 | 2 | 10 | 0 | 3 | 308 | 0 | 0 | 0 | \ |
| Example 19 | 13 | 360 | 5 | 2 | 10 | 0 | 3 | 390 | 10 | 0.01% | 0 | \ |
| Example 20 | 6 | 180 | 5 | 2 | 10 | 0 | 3 | 218 | 5 | 0 | 0.08% | \ |
| Example 21 | 19 | 420 | 5 | 2 | 10 | 0 | 3 | 363 | 5 | 0 | 0 | \ |
| Example 22 | 4 | 150 | 5 | 2 | 10 | 0 | 3 | 256 | 5 | 0.03% | 0.1% | \ |
| Example 23 | 25 | 450 | 5 | 2 | 10 | 0 | 3 | 356 | 5 | 0 | 0 | \ |

It should be noted that, for ease of viewing in Table 1 above, in the column of W4, negative values indicate the case in which the first side of the second part 132 is located on the insulating layer 14 (for example, W4 is -2 mm in Table 1, to be specific, the first side of the second part 132 is located on the insulating layer 14, and W4=2 mm), while positive values indicate the case in which the first side of the second part 132 is located on the surface of the first part 131 (for example, W4 is 2 mm in Table 1, to be specific, the first side of the second part 132 is located on the surface of the first part 131, and W4=2 mm). In the column of W6, negative values indicate the case in which the first side of the first weld mark 61 is located on the first part 131 (for example, W6 is -3 mm in Table 1, to be specific, the first side of the first weld mark 61 is located on the first part 131, and W6=3 mm), while positive values indicate the case in which the first side of the first weld mark 61 is located on the surface of the second part 132 (for example, W6 is 20 mm in Table 1, to be specific, the first side of the first weld mark 61 is located on the surface of the second part 132, and W6=20 mm). Additionally, in Table 1, "\" indicates "none", and the quantity of "*" represents the degree of wrinkling, with more "*" indicating more severe wrinkling. Additionally, for Examples 1 to 23 and Comparative Examples 3 and 4, the folding ratio of electrode tab may be a folding ratio of the second part 132 and the first part 131 (which can be understood in conjunction with FIGs. 3A, 3B, 4A, 4B, and 4C), while for Comparative Examples 1 and 2, the folding ratio of electrode tab may be a folding ratio of the edge blank region (that is, the electrode tab lead-out structure 15' in FIG. 2) (which can be understood in conjunction with FIG. 2).

From the analysis of the various sets of data shown in Table 1, the following results can be observed:
A. Compared to Comparative Examples 1 and 2, in Examples 1 to 23 of some embodiments of this application, the folding of electrode tab, the strip breakage of cathode electrode plate, and the wrinkling after cold pressing of the electrochemical apparatus are significantly alleviated. Therefore, it can be learned that this application effectively increases the preparation yield of the electrochemical apparatus.
B. Compared to Comparative Example 3, in Examples 1 to 23 and Comparative Example 4 of some embodiments of this application, the widths W2 of the first parts 131 in Examples 1 to 23 and Comparative Example 4 all meet 0.5 mm≤W2≤20 mm, while the width W2 of the first part 131 in Comparative Example 3 is 30 mm, which does not meet the above range. The wrinkling after cold pressing of the electrochemical apparatus of Comparative Example 3 is more severe than those of the electrochemical apparatuses of Examples 1 to 23 and Comparative Example 4. Therefore, 0.5 mm≤W2≤20 mm is a more preferred value range.
C. Compared to Comparative Example 4, in Examples 1 to 23 and Comparative Example 3 of some embodiments of this application, the widths W1 of the second parts 132 in Examples 1 to 23 and Comparative Example 3 all meet 3 mm≤W1≤35 mm, while the width W1 of the second part 132 in Comparative Example 4 is 40 mm, which does not meet the above range. The folding of electrode tab (folding ratio of electrode tab is 0.4%) of the electrochemical apparatus of Comparative Example 4 is more severe than those of the electrochemical apparatuses of Examples 1 to 23 and Comparative Example 3 (maximum folding ratio of electrode tab is 0.3%). Therefore, 3 mm≤W1≤35 mm is a more preferred value range.

The term "includes" and variations thereof as used herein are open-ended, meaning "including but not limited to." The term "based on" means "at least partially based on." The term "one embodiment" means "at least one embodiment"; the term "another embodiment" means "at least one additional embodiment"; and the term "some embodiments" means "at least some embodiments." Relevant definitions of other terms will be provided in the following description. It should be noted that the terms "first," "second," and the like mentioned in this application are only used to distinguish different apparatuses, modules, or units and are not used to limit the order of the functions performed by these apparatuses, modules, or units or their mutual dependencies.

It should be noted that the modifiers "one" and "a plurality of" mentioned in this application are illustrative rather than restrictive. Those skilled in the art should understand that unless explicitly stated otherwise in the context, they should be understood to mean "one or more."

Persons skilled in the art can easily figure out another implementation solution of this application after considering the specification and practicing the present invention disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and some embodiments are merely considered as examples, and the actual scope and the spirit of this application are pointed out by the following claims.

## Claims

1. An electrochemical apparatus, comprising an electrode plate, wherein the electrode plate comprises a current collector, an active material layer arranged on a surface of the current collector, and a plurality of electrode tab connection portions, wherein each electrode tab connection portion comprises a first part and a second part, and in an unfolded state of the electrode plate, the first parts of the plurality of electrode tab connection portions extend from an edge of the current collector along a width direction of the electrode plate and are spaced apart from each other, and the second parts are arranged on surfaces of the first parts and are electrically connected to the first parts.

2. The electrochemical apparatus according to claim 1, wherein along the width direction of the electrode plate, a width W1 of the second part meets 3 mm≤W1≤35 mm.

3. The electrochemical apparatus according to claim 2, wherein along the width direction of the electrode plate, a width W1 of the second part meets 5 mm≤W1≤25 mm.

4. The electrochemical apparatus according to claim 1, wherein along the width direction of the electrode plate, a width W2 of the first part meets 0.5 mm≤W2≤20 mm.

5. The electrochemical apparatus according to claim 4, wherein along the width direction of the electrode plate, a width W2 of the first part meets 1 mm≤W2≤10 mm.

6. The electrochemical apparatus according to claim 1, wherein the electrode plate comprises a cathode electrode plate, an insulating layer is further provided on a surface of the current collector, and the active material layer and the insulating layer are arranged along the width direction of the electrode plate.

7. The electrochemical apparatus according to claim 6, wherein along the width direction of the electrode plate, a width W3 of the insulating layer meets 0.5 mm≤W3≤5 mm.

8. The electrochemical apparatus according to claim 6, wherein the he insulating layer is made of at least one of aluminum oxide or silicon oxide.

9. The electrochemical apparatus according to claim 6, wherein along the width direction of the electrode plate, the insulating layer comprises a first side close to the active material layer and a second side far away from the active material layer;
a first side of the second part is located on the insulating layer, and a spacing W4 between the first side of the second part and the second side of the insulating layer meets 0 mm≤W4≤8 mm;
or
a first side of the second part is located on a surface of the first part, and a spacing W4 between the first side of the first part and the second side of the insulating layer meets 0 mm≤W4≤10 mm.

10. The electrochemical apparatus according to claim 9, wherein the first side of the second part is located on the surface of the first part, and the spacing W4 between the first side of the second part and the second side of the insulating layer meets 0 mm≤W4≤5 mm.

11. The electrochemical apparatus according to claim 1, wherein the electrode plate is an anode electrode plate.

12. The electrochemical apparatus according to any one of claims 1 to 11, wherein the first part and the second part are electrically connected through welding, and a first weld mark is formed when the first part and the second part are welded together;
along the width direction of the electrode plate, the first weld mark comprises a first side close to the active material layer and a second side far away from the active material layer; and
the second side of the first weld mark is located on the second part, and the first side of the first weld mark is apart from the active material layer.

13. The electrochemical apparatus according to claim 12, wherein along the width direction of the electrode plate, a width W5 of the first weld mark meets 0.1 mm≤W5≤10 mm.

14. The electrochemical apparatus according to claim 12, wherein the first side of the first weld mark is located on the first part, and a spacing W6 between the first side of the first weld mark and the first side of the second part meets 0 mm≤W6≤5 mm.
or
the first side of the first weld mark is located on a surface of the second part, and a spacing W6 between the first side of the first weld mark and the first side of the second part meets 0 mm≤W6≤30 mm.

15. The electrochemical apparatus according to claim 14, wherein the first side of the first weld mark is located on the first part, and the spacing W6 between the first side of the first weld mark and the first side of the second part meets 0 mm≤W6≤3 mm.
or
the first side of the first weld mark is located on the surface of the second part, and the spacing W6 between the first side of the first weld mark and the first side of the second part meets 0 mm≤W6≤10 mm.

16. The electrochemical apparatus according to claim 12, wherein a first projection the second side of the first weld mark on the second part overlaps with a second projection of the first part on the second part, and a spacing W7 between the second side of the first weld mark and the second side of the first part meets 0 mm≤W7≤15 mm;
or
a first projection the second side of the first weld mark on the second part does not overlap with a second projection of the first part on the second part, and a spacing W7 between the second side of the first weld mark and the second side of the first part meets 0 mm≤W7≤7 mm.

17. The electrochemical apparatus according to claim 16, wherein the first projection the second side of the first weld mark on the second part overlaps with the second projection of the first part on the second part, and the spacing W7 between the second side of the first weld mark and the second side of the first part meets 0 mm≤W7≤10 mm;
or
the first projection the second side of the first weld mark on the second part does not overlap with the second projection of the first part on the second part, and the spacing W7 between the second side of the first weld mark and the second side of the first part meets 0 mm≤W7≤3 mm.

18. The electrochemical apparatus according to claim 12, wherein the electrochemical apparatus further comprises a housing and an electrode tab protruding out of the housing, wherein the electrode tab and the second part are electrically connected through welding and form a second weld mark on the second part; and
along the width direction of the electrode plate, the second weld mark comprises a first side close to the first part and a second side far away from the first part; wherein
a spacing W8 between the second side of the first weld mark and the first side of the second weld mark meets 0 mm<W8≤10 mm.

19. The electrochemical apparatus according to claim 1, wherein a welding tensile strength F between the first part and the second part meets 5 N≤F≤1000 N.

20. The electrochemical apparatus according to claim 19, wherein the welding tensile strength F between the first part and the second part meets 10 N≤F≤500 N.

21. The electrochemical apparatus according to claim 1, wherein the first part and/or the second part are conductive foils, and a resistance R per square millimeter of the conductive foil meets R<20 mΩ.

22. The electrochemical apparatus according to claim 21, wherein the conductive foil comprises at least one of aluminum foil, aluminum-plated foil, nickel foil, or nickel-plated foil.

23. The electrochemical apparatus according to claim 22, wherein the aluminum-plated foil comprises at least one of a foil with aluminum plated on a surface of a polypropylene film and a foil with aluminum plated on a surface of a poly diethyl terephthalate film.

24. The electrochemical apparatus according to claim 1, wherein a thickness L of the second part meets 4 µm≤L≤25 µm.

25. The electrochemical apparatus according to claim 24, wherein the thickness L of the second part meets 5 µm≤L≤20 µm.

26. The electrochemical apparatus according to claim 1, wherein a tensile strength S of the second part meets 80 MPa≤S≤800 MPa.

27. The electrochemical apparatus according to claim 26, wherein the tensile strength S of the second part meets 100 MPa≤S≤450 MPa.

28. The electrochemical apparatus according to claim 1, wherein the electrochemical apparatus is prepared by winding a cathode electrode plate, a separator, and an anode electrode plate.

29. An electric device, comprising the electrochemical apparatus according to any one of claims 1 to 28.
